# EUROPÄISCHE PATENTANMELDUNG

(11) **EP 3 686 238 A1**
(43) Veröffentlichungstag der Anmeldung: **29.07.2020**
(21) Anmeldenummer: 20158798.7
(22) Anmeldetag: 22.03.2017
(51) Int. Cl.: C08K 5/00, C08K 5/11, C08K 5/12, C08K 5/10, C08L 27/06

(54) **POLYMER-ZUSAMMENSETZUNG, ENTHALTEND EINEN CYCLOALKYL-ALKYL-DICARBONSÄUREDIESTER ALS WEICHMACHER**

(30) Priorität: 23.03.2016 EP 16161873
(62) Teilanmeldung aus: 17719490.9
(71) Anmelder: BASF SE, 67056 Ludwigshafen am Rhein (DE)
(72) Erfinder: Pfeiffer, Matthias, 67056 Ludwigshafen (DE); Breitscheidel, Boris, 67056 Ludwigshafen (DE); Grimm, Axel, 67056 Ludwigshafen (DE); Morgenstern, Herbert, 67056 Ludwigshafen (DE); Kaller, Martin, 67056 Ludwigshafen (DE)
(74) Vertreter: BASF IP Association

(57) **Zusammenfassung**

Die vorliegende Erfindung betrifft eine Polymer-Zusammensetzung, enthaltend einen Cycloalkyl-alkyl-dicarbonsäurediester als Weichmacher, sowie Formmassen und Plastisole, die jeweils eine solche Polymer-Zusammensetzung enthalten und die Verwendung dieser Polymer-Zusammensetzungen.

## Beschreibung

### HINTERGRUND DER ERFINDUNG

Die vorliegende Erfindung betrifft eine Polymer-Zusammensetzung, enthaltend einen Cycloalkyl-alkyl-dicarbonsäurediester als Weichmacher, sowie Formmassen und Plastisole, die jeweils eine solche Polymer-Zusammensetzung enthalten und die Verwendung dieser Polymer-Zusammensetzungen.

### STAND DER TECHNIK

Zur Erzielung gewünschter Verarbeitungs- bzw. Anwendungseigenschaften werden einer Vielzahl von Kunststoffen so genannte Weichmacher zugesetzt, um diese weicher, flexibler und/oder dehnbarer zu machen. Im Allgemeinen dient der Einsatz von Weichmachern dazu, den thermoplastischen Bereich von Kunststoffen zu niedrigeren Temperaturen hin zu verschieben, um im Bereich niedriger Verarbeitungs- und Einsatztemperaturen die gewünschten elastischen Eigenschaften zu erhalten.

Polyvinylchlorid (PVC) gehört zu den mengenmäßig meist hergestellten Kunststoffen. Aufgrund seiner vielseitigen Anwendbarkeit findet es sich heutzutage in einer Vielzahl von Produkten des täglichen Lebens. PVC wird daher eine sehr große wirtschaftliche Bedeutung zugemessen. PVC ist ursprünglich ein bis ca. 80 ° C harter und spröder Kunststoff, der durch Zugabe von Thermostabilisatoren und anderen Zuschlagstoffen als Hart-PVC (PVC-U) eingesetzt wird. Erst durch die Zugabe geeigneter Weichmacher gelangt man zu Weich-PVC (PVC-P), das für viele Anwendungszwecke verwendet werden kann, für die Hart-PVC ungeeignet ist.

Ob sich eine Substanz zur Anwendung als Weichmacher für ein bestimmtes Polymer eignet, hängt weitgehend von den Eigenschaften des weichzumachenden Polymers ab. Erwünscht sind in der Regel Weichmacher, die eine hohe Verträglichkeit mit dem weichzumachenden Polymer aufweisen, diesem gute thermoplastische Eigenschaften verleihen und nur eine geringe Neigung zum Abdampfen und/oder Ausschwitzen (hohe Permanenz) besitzen.

Auf dem Markt ist eine Vielzahl verschiedener Verbindungen zur Weichmachung von PVC und weiteren Kunststoffen erhältlich. Aufgrund ihrer guten Verträglichkeit mit dem PVC und ihrer vorteilhaften anwendungstechnischen Eigenschaften wurden in der Vergangenheit vielfach Phthalsäurediester mit Alkoholen unterschiedlicher chemischer Struktur als Weichmacher eingesetzt, wie z. B. Diethylhexylphthalat (DEHP), Diisononylphthalat (DINP) und Diisodecylphthalat (DIDP). Kurzkettige Phthalate, wie beispielsweise Dibutylphthalat (DBP), Diisobutylphthalat (DIBP), Benzylbutylphthalat (BBP) oder Diisoheptylphthalat (DIHP), werden auch als Schnellgelierer ("fast fuser") eingesetzt, z. B. bei der Herstellung von so genannten Plastisolen. Neben den kurzkettigen Phthalaten können auch Dibenzoesäureester wie Dipropylenglykoldibenzoate zum gleichen Zwecke eingesetzt werden. Eine weitere Klasse von Weichmachern mit guten Geliereigenschaften, sind beispielsweise die Phenyl- und Cresylester von Alkylsulfonsäuren, die unter dem Markennamen Mesamoll® erhältlich sind.

Bei Plastisolen handelt es sich zunächst um eine Suspension von feinpulvrigen Kunststoffen in flüssigen Weichmachern. Dabei ist die Lösungsgeschwindigkeit des Polymers in dem Weichmacher bei Umgebungstemperatur sehr gering. Erst beim Erwärmen auf höhere Temperaturen löst sich das Polymer merklich im Weichmacher. Dabei quellen und fusionieren die einzelnen isolierten Kunststoffaggregate zu einem dreidimensionalen hochviskosen Gel. Dieser Vorgang wird als Gelieren bezeichnet und findet ab einer gewissen Mindesttemperatur statt, die als Gelier- oder Lösetemperatur bezeichnet wird. Der Schritt der Gelierung ist nicht reversibel.

Da Plastisole in flüssiger Form vorliegen, werden diese sehr häufig zum Beschichten von verschiedensten Materialien, wie z. B. Textilien, Glasvliesen etc., eingesetzt. Dabei wird die Beschichtung sehr häufig aus mehreren Lagen aufgebaut.

In der Praxis wird bei der Verarbeitung von Plastisolprodukten deshalb oftmals so vorgegangen, dass eine Schicht Plastisol aufgebracht wird und direkt im Anschluss der Kunststoff, insbesondere PVC, mit dem Weichmacher oberhalb der Lösetemperatur angeliert wird, also eine feste Schicht, bestehend aus einer Mischung aus gelierten, teilweise gelierten und nicht-gelierten Kunststoffpartikeln entsteht. Auf diese angelierte Schicht wird dann die nächste Lage aufgebracht und nach Aufbringen der letzten Schicht der Gesamtaufbau durch Erwärmen auf höhere Temperaturen komplett zum vollständig gelierten Kunststoffprodukt verarbeitet.

Neben Plastisolen können auch trockene pulverförmige Mischungen aus Weichmacher und Kunststoffen hergestellt werden. Solche Dry-Blends, insbesondere auf Basis PVC, können dann bei erhöhten Temperaturen, z. B. durch Extrusion, zu einem Granulat weiterverarbeitet oder durch herkömmliche Formgebungsverfahren, wie Spritzgießen, Extrudieren oder Kalandrieren, zum vollständig gelierten Kunststoffprodukt verarbeitet werden.

Aufgrund steigender technischer und wirtschaftlicher Anforderungen an die Verarbeitung thermoplastischer Polymere und Elastomere, sind zudem Weichmacher erwünscht, die gute Geliereigenschaften besitzen.

Insbesondere bei der Herstellung und Verarbeitung von PVC-Plastisolen, beispielsweise zur Herstellung von PVC-Beschichtungen, ist es unter anderem wünschenswert, einen Weichmacher mit niedriger Geliertemperatur als Schnellgelierer ("fast fuser") zur Verfügung zu haben. Darüber hinaus ist auch eine hohe Lagerstabilität des Plastisols gewünscht, d. h. das nicht-gelierte Plastisol soll bei Umgebungstemperatur keinen oder nur einen geringen Viskositätsanstieg mit der Zeit aufweisen. Diese Eigenschaften sollen möglichst durch Zugabe eines geeigneten Weichmachers mit Schnellgeliereigenschaften erzielt werden, wobei sich der Einsatz von weiteren viskositätsverringernden Additiven und/oder von Lösungsmitteln erübrigen soll.

Allerdings weisen Schnellgelierer in der Regel oft eine verbesserungswürdige Verträglichkeit mit den additivierten Polymeren auf. Außerdem zeigen sie meistens eine hohe Flüchtigkeit sowohl bei der Verarbeitung als auch während des Gebrauchs der Endprodukte. Zudem wirkt sich der Zusatz von Schnellgelierern in vielen Fällen nachteilig auf die mechanischen Eigenschaften der Endprodukte aus. Zum Einstellen der gewünschten Weichmacher-Eigenschaften ist daher auch bekannt, Mischungen von Weichmachern einzusetzen, z. B. wenigstens einen Weichmacher, der gute thermoplastische Eigenschaften verleiht, aber weniger gut geliert, in Kombination mit wenigstens einem Schnellgelierer.

Zum Einstellen der gewünschten Weichmacher-Eigenschaften sind im Stand der Technik verschiedene alternative Weichmacher mit unterschiedlichen Eigenschaften für diverse Kunststoffe und speziell für PVC bekannt. Darüber hinaus ist auch bekannt, Mischungen von Weichmachern einzusetzen, z. B. wenigstens einen Weichmacher, der gute thermoplastische Eigenschaften verleiht, aber weniger gut geliert, in Kombination mit wenigstens einem Weichmacher, der gute Geliereigenschaften verleiht.

Die EP 2631267 A1 offenbart Bernsteinsäurealkylester-Mischungen als Weichmacher für Kunststoffe, insbesondere für PVC. Dabei werden Mischungen von wenigstens zwei Bernsteinsäurealkyldiester, welche auf zwei unterschiedlichen, monofunktionellen, geradkettigen oder verzweigten, Alkoholen basieren, verwendet.

Die EP 432124 A1 offenbart die Verwendung von Dicyclohexyladipat in Mischungen mit Polyvinylbutyral. Darin werden insbesondere die Vorteile einer Kombination von Mischestern der Adipinsäure mit Polyvinylbutyral im Vergleich zu den reinen Diestern, beispielsweise Dicyclohexyladipat, offenbart. Diese Mischungen dienen als Zwischenschicht in Sicherheitsverglasungen und haben den Vorteil einer verbesserten UV-Beständigkeit, reduzierter Delaminierungs-Tendenz an den Kanten des Glas-Kunststoffverbundes und verbesserter Stoß-Aufnahme.

Der vorliegenden Erfindung liegt die Aufgabe zugrunde, eine Polymer-Zusammensetzung für thermoplastische Polymere und Elastomere zur Verfügung zu stellen. Die Polymer-Zusammensetzung soll Formmassen, Plastisolen und PVC-Zusammensetzungen einerseits gute thermoplastische Eigenschaften sowie andererseits gute Geliereigenschaften, d. h. eine möglichst niedrige Geliertemperatur, verleihen. Die Polymer-Zusammensetzung soll sich dadurch insbesondere zur Bereitstellung von Plastisolen eignen. Die Polymer-Zusammensetzung soll eine hohe Verträglichkeit mit dem weichzumachenden Polymer aufweisen, eine hohe Permanenz besitzen und zudem eine geringe Flüchtigkeit sowohl bei der Verarbeitung als auch während des Gebrauchs der Endprodukte zeigen. Des Weiteren besteht der Bedarf für besonders toxikologisch unbedenkliche Weichmacher. Dies gilt speziell für sensible Anwendungsbereiche wie Kinderspielzeug, Lebensmittelverpackungen oder medizinische Artikel.

### ZUSAMMENFASSUNG DER ERFINDUNG

Ein Gegenstand der vorliegenden Erfindung sind Polymer-Zusammensetzungen, enthaltend
A) ein oder mehrere Polymer(e) ausgewählt unter PVC Homo- und Copolymeren, mit der Maßgabe, dass die Polymer-Zusammensetzung 50 bis 100 Gew.-%, bezogen auf den Gesamtgehalt an Polymeren der Polymer-Zusammensetzung, wenigstens eines Polymers enthält, welches ausgewählt ist unter PVC Homo- und Copolymeren,
   und
B1) eine oder mehrere Verbindung(en) der Formel (I) 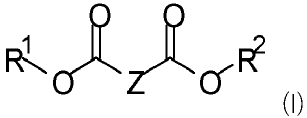 worin
   - Z: für eine unverzweigte oder verzweigte C₂-C₈-Alkylengruppe oder für eine unverzweigte oder verzweigte C₂-C₈-Alkenylengruppe, enthaltend wenigstens eine Doppelbindung, steht und
   - R¹: für einen gesättigten, unverzweigten oder verzweigten C₄-C₁₂-Alkylrest steht, und
   - R²: für einen gesättigten C₃-C₈-Cycloalkylrest steht, wobei die Cycloalkyl-Reste unabhängig voneinander entweder unsubstituiert sind oder mit wenigstens einem C₁-C₁₀-Alkyl Rest substituiert sind.

Ein weiterer Gegenstand der Erfindung sind Polymer-Zusammensetzungen, enthaltend
A) eine oder mehrere Polymerkomponente(n) ausgewählten unter thermoplastischen Polymeren und Elastomeren sowie Mischungen davon,
B1) eine oder mehrere Verbindung(en) der Formel (I) 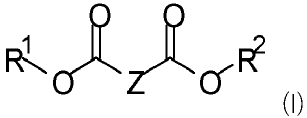
B2) gegebenenfalls eine oder mehrere Verbindung(en) der allgemeinen Formel (II.a), 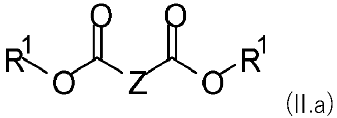
B3) gegebenenfalls eine oder mehrere Verbindung(en) der allgemeinen Formel (II.b) 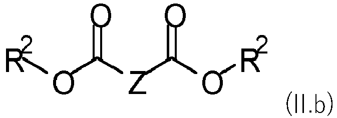 worin
   - Z: für eine unverzweigte oder verzweigte C₂-C₈-Alkylengruppe oder für eine unverzweigte oder verzweigte C₂-C₈-Alkenylengruppe, enthaltend wenigstens eine Doppelbindung, steht und
   - R¹: für einen gesättigten, unverzweigten oder verzweigten C₄-C₁₂-Alkylrest steht, und
   - R²: für einen gesättigten C₃-C₈-Cycloalkylrest steht, wobei die Cycloalkyl-Reste unabhängig voneinander entweder unsubstituiert sind oder mit wenigstens einem C₁-C₁₀-Alkyl Rest substituiert sind,
   und
C) einen oder mehrere weitere(n) Weichmacher, der/die ausgewählt ist/sind unter
   - 1,2-Cyclohexandicarbonsäurediestern,
   - Phthalsäurediestern,
   - Terephthalsäurediestern.

Ein weiterer Gegenstand der Erfindung sind Formmassen, bestehend aus oder enthaltend eine Polymer-Zusammensetzung wie hierin definiert.

Ein weiterer Gegenstand der Erfindung sind Plastisole, bestehend aus oder enthaltend eine Polymer-Zusammensetzung wie hierin definiert.

Ein weiterer Gegenstand der Erfindung ist die Verwendung einer Polymer-Zusammensetzung wie hierin definiert, als Weichmacher für thermoplastische Polymere und Elastomere.

Ein weiterer Gegenstand der Erfindung ist die Verwendung einer Polymer-Zusammensetzung wie hierin definiert in Plastisolen.

Ein weiterer Gegenstand der Erfindung ist die Verwendung einer Polymer-Zusammensetzung wie hierin definiert in Formmassen.

Ein weiterer Gegenstand der Erfindung ist die Verwendung einer Polymer-Zusammensetzung wie hierin definiert, zur Herstellung von Formkörpern und Folien.

### BESCHREIBUNG DER ERFINDUNG

Die erfindungsgemäßen Polymer-Zusammensetzungen weisen die folgenden Vorteile auf:
- Die erfindungsgemäßen Polymer-Zusammensetzungen zeichnen sich durch eine hohe Verträglichkeit mit den weichzumachenden Polymeren, insbesondere PVC, aus.
- Die erfindungsgemäßen Polymer-Zusammensetzungen besitzen eine hohe Permanenz. Die erfindungsgemäßen Polymer-Zusammensetzungen zeigen somit eine geringe Flüchtigkeit sowohl bei der Verarbeitung als auch während des Gebrauchs der Endprodukte.
- Die erfindungsgemäßen Polymer-Zusammensetzungen eignen sich in vorteilhafter Weise zur Erzielung einer Vielzahl unterschiedlichster und komplexer Verarbeitungs- und Anwendungseigenschaften von Kunststoffen.
- Die erfindungsgemäße Polymer-Zusammensetzung eignet sich in vorteilhafter Weise zur Herstellung von Plastisolen.
- Die erfindungsgemäßen Polymer-Zusammensetzungen eignen sich für die Verwendung zur Herstellung von Formkörpern und Folien für sensible Anwendungsbereiche, wie Medizinprodukte, Lebensmittelverpackungen, Produkte für den Innenraumbereich, beispielsweise von Wohnungen und Fahrzeugen, Spielzeuge, Kinderpflegeartikel, etc.
- Zur Herstellung der in den erfindungsgemäßen Polymer-Zusammensetzungen enthaltenen Verbindungen können leicht zugängliche Edukte verwendet werden.
- Die Verfahren zur Herstellung der erfindungsgemäß eingesetzten Verbindungen sind einfach und effizient, wodurch diese problemlos in großtechnischem Maßstab bereitgestellt werden können.

Im Rahmen der vorliegenden Erfindung steht, sofern nichts anderes angegeben ist, PVC für Polyvinylchlorid, wobei Polyvinylchlorid Homopolymere und Polyvinylchlorid Copolymere umfasst sind.

Im Rahmen der vorliegenden Erfindung wird unter einem Schnellgelierer bzw. "fast fuser" ein Weichmacher verstanden, der eine nach DIN 53408:1967-06 bestimmte Lösetemperatur von unter 120 ° C aufweist. Solche Schnellgelierer werden insbesondere zur Herstellung von Plastisolen verwendet.

Im Rahmen der vorliegenden Erfindung steht die zuvor oder im Folgenden verwendete Abkürzung phr (parts per hundred resin) für Gewichtsteile Weichmacher pro hundert Gewichtsteile Polymer.

Im Rahmen der Erfindung gibt das Präfix Cₙ-Cₘ die Anzahl der Kohlenstoffatome an, die ein damit bezeichnetes Molekül oder eine damit bezeichnete Gruppe aufweisen kann.

Im Rahmen der vorliegenden Erfindung umfasst der Ausdruck "C₄-C₁₂-Alkyl" unverzweigte oder verzweigte Alkyl-Gruppen mit 4, 5, 6, 7, 8, 9, 10, 11 oder 12 Kohlenstoffatomen. Dazu zählen beispielsweise n-Butyl, Isobutyl, sec-Butyl, tert-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 1-Ethylbutyl, 2-Ethylbutyl, n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl und die Strukturisomere davon.

In einer Ausführungsform bevorzugte C₄-C₁₂-Alkyl sind verzweigte oder unverzweigte C₇-C₁₂-Alkyl-Gruppen, wie n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl und dergleichen.

Im Rahmen der vorliegenden Erfindung umfasst der Ausdruck "C₁-C₁₀-Alkyl" geradkettige und verzweigte C₁-C₁₀-Alkyl-Gruppen, beispielsweise Methyl, Ethyl, Propyl, Butyl, Pentyl, Hexyl, Heptyl, Octyl, Nonyl und Decyl und die Strukturisomere davon.

Im Rahmen der vorliegenden Erfindung umfasst der Ausdruck "C₃-C₈-Cycloalkyl" gesättigte cyclische Kohlenwasserstoffe mit 3, 4, 5, 6, 7 oder 8 Kohlenstoffatomen. Dazu zählen Cyclopropyl, Cyclobutyl, Cyclopentyl, Cyclohexyl, Cycloheptyl und Cyclooctyl.

In einer Ausführungsform bevorzugte C₃-C₈-Cycloalkyl sind C₅-C₇-Cycloalkyl, wie Cyclopenyl, Cyclohexyl und Cycloheptyl.

Die Cycloalkyl-Gruppen können unsubstituiert oder substituiert sein.

Substituierte Cycloalkylgruppen können, in Abhängigkeit von ihrer Ringgröße, einen oder mehrere, beispielsweise 1, 2, 3, 4 oder 5, C₁-C₁₀-Alkylsubstituenten aufweisen. Dabei sind die C₁-C₁₀-Alkylgruppen **jeweils unabhängig voneinander ausgewählt unter** geradkettigen und verzweigten C₁-C₁₀-Alkylgruppen, beispielsweise Ethyl, Methyl, n-Propyl, Isopropyl, n-Butyl, Isobutyl, sec-Butyl, tert-Butyl, n-Pentyl, n-Hexyl, n-Heptyl, n-Octyl, n-Nonyl. n-Decyl und den Strukturisomere davon.

Beispiele für substituierte C₅-C₇-Cycloalkylgruppen sind 2-Methylcyclopentyl, 3-Methylcyclopentyl, 2-Methylcyclohexyl, 3-Methylcyclohexyl, 4-Methylcyclohexyl, 2-Methylcycloheptyl, 3-Methylcycloheptyl, 4-Methylcycloheptyl, 2-Ethylcyclopentyl, 3-Ethylcyclopentyl, 2-Ethylcyclohexyl, 3-Ethylcyclohexyl, 4-Ethylcyclohexyl, 2-Ethylcycloheptyl, 3-Ethylcycloheptyl, 4-Ethylcycloheptyl. Bevorzugt sind 2-Methylcyclopentyl, 2-Methylcyclohexyl, und 2-Methylcycloheptyl.

Im Rahmen der vorliegenden Erfindung umfasst der Ausdruck "unverzweigte oder verzweigte C₂-C₈-Alkylengruppe" unverzweigte oder verzweigte, zweiwertige Kohlenwasserstoff-Gruppen mit 2, 3, 4, 5, 6, 7 oder 8 Kohlenstoffatomen. Dazu zählen beispielsweise 1,2-Ethylen, 1,2-Propylen, 1,3-Propylen, 1,3-Butylen, 1,4-Butylen, 2-Methyl-1,3-propylen, 1,1-Dimethyl-1,2-ethylen, 1,4-Pentylen, 1,5-Pentylen, 2-Methyl-1,4-butylen, 2,2-Dimethyl-1,3-propylen, 1,6-Hexylen, 2-Methyl-1,5-pentylen, 3-Methyl-1,5-pentylen, 2,3-Dimethyl-1,4-butylen, 1,7-Heptylen, 2-Methyl-1,6-hexylen, 3-Methyl-1,6-hexylene, 2-Ethyl-1,5-pentylen, 3-Ethyl-1,5-pentylen, 2,3-Dimethyl-1,5-pentylen, 2,4-Dimethyl-1,5-pentylen, 1,8-Octylen, 2-Methyl-1,7-heptylen, 3-Methyl-1,7-heptylen, 4-Methyl-1,7-heptylen, 2-Ethyl-1,6-hexylen, 3-Ethyl-1,6-hexylen, 2,3-Dimethyl-1,6-hexylen, 2,4-Dimethyl-1,6-hexylen und dergleichen.

In einer Ausführungsform bevorzugte C₂-C₈-Alkylengruppen sind C₃-C₈-Alkylengruppen.

Im Rahmen der vorliegenden Erfindung umfasst der Ausdruck "unverzweigte oder verzweigte C₂-C₈-Alkenylengruppe" unverzweigte oder verzweigte, zweiwertige Kohlenwasserstoff-Gruppen mit 2, 3, 4, 5, 6, 7 oder 8 Kohlenstoffatomen, wobei die Hauptkette wenigstens eine Doppelbindung aufweist. Dazu zählen beispielsweise Ethenylen, Propenylen, 1-Methyl-ethenylen, 1-Butenylen, 2-Butenylen, 1-Methylpropenylen, 2-Methylpropenylen, 1-Pentenylen, 2-Pentenylen, 1-Methyl-1-butenylen, 1-Methyl-2-butenylen, 1-Hexenylen, 2-Hexenylen, 3-Hexenylen, 1-Methyl-1-pentenylen, 1-Methyl-2-pentenylen, 1-Methyl-3-pentenylen, 1,4-Dimethyl-1-butenylen, 1,4-Dimethyl-2-butenylen und dergleichen.

In einer Ausführungsform bevorzugte C₂-C₈-Alkenylengruppe sind C₂-C₄-Alkenylengruppen mit einer Doppelbindung.

Die Doppelbindungen in den Alkenylengruppen können unabhängig voneinander in der E- oder Z-Konfiguration oder als Mischung beider Konfigurationen vorliegen.

Bei den einfach oder mehrfach verzweigten Alkylengruppen und Alkenylengruppen kann das Kohlenstoffatom am Verzweigungspunkt oder die Kohlenstoffatome an den jeweiligen Verzweigungspunkten, unabhängig voneinander eine R- oder eine S-Konfiguration oder beide Konfigurationen zu gleichen oder unterschiedlichen Anteilen aufweisen.

### Komponente B1, B2 und B3

Die Komponente B) umfasst die Komponenten B1) und gegebenenfalls B2) und gegebenenfalls B3).

Somit umfasst die Weichmacher-Komponente B)
B1) eine oder mehrere Verbindung(en) der Formel (I)
   und gegebenenfalls
B2) eine oder mehrere Verbindung(en) der Formel (II.a)
   und gegebenenfalls
B3) eine oder mehrere Verbindung(en) der Formel (II.b),
   wobei die Verbindungen der Formeln (I), (II.a) und (II.b) wie hierin definiert sind.

In den Verbindungen der Formeln (I), (II.a) und (II.b) steht erfindungsgemäß
- Z: für eine unverzweigte oder verzweigte C₂-C₈-Alkylengruppe oder für eine unverzweigte oder verzweigte C₂-C₈-Alkenylengruppe, enthaltend wenigstens eine Doppelbindung,
- R¹: für einen gesättigten, unverzweigten oder verzweigten C₄-C₁₂-Alkylrest, und
- R²: für eine gesättigte C₃-C₈-Cycloalkylgruppe, wobei die Cycloalkyl-Reste unabhängig voneinander entweder unsubstituiert sind oder mit wenigstens einem C₁-C₁₀-Alkyl Rest substituiert sind.

Vorzugsweise steht Z für eine unverzweigte oder verzweigte C₂-C₈-Alkylengruppe, bevorzugt für eine unverzweigte oder verzweigte C₃-C₈-Alkylengruppe. Dabei sind die unverzweigten Gruppen jeweils bevorzugt.

Besonders bevorzugt steht Z für 1,3-Propylen, 1,4-Butylen, 1,5-Pentylen, 1,6-Hexylen, 1,7-Heptylen oder 1,8-Octylen. Insbesondere bevorzugt ist 1,4-Butylen.

Vorzugsweise steht R¹ für eine gesättigte, unverzweigte oder verzweigte C₇-C₁₂-Alkylgruppe.

Besonders bevorzugt steht R¹ für n-Octyl, n-Nonyl, Isononyl, 2-Ethylhexyl, Isodecyl, 2-Propylheptyl, n-Undecyl oder Isoundecyl. Insbesondere bevorzugt ist 2-Ethylhexyl, Isononyl oder 2-Propylheptyl, speziell 2-Ethylhexyl oder Isononyl.

Vorzugsweise steht R² für eine gesättigte C₅-C₇-Cycloalkylgruppe, wobei die Cycloalkyl-Reste unabhängig voneinander entweder unsubstituiert sind oder mit wenigstens einem C₁-C₁₀-Alkyl Rest substituiert sind.

Besonders bevorzugt steht R² für Cyclopentyl, Cyclohexyl, Cycloheptyl, 2-Methylcyclopentyl, 2-Methylcyclohexyl oder 2-Methylcycloheptyl, insbesondere bevorzugt für Cyclopentyl, Cyclohexyl, Cycloheptyl oder 2-Methylcyclohexyl, speziell für Cyclohexyl oder 2-Methylcyclohexyl.

In einer ersten Ausführungsform enthält die Polymer-Zusammensetzung ausschließlich Verbindungen der Formel (I) als Weichmacher.

In einer zweiten Ausführungsform enthält die Polymer-Zusammensetzung Verbindungen der Formeln (I) (II.a) und/oder (II.b) als Weichmacher. Bevorzugt enthält die Zusammensetzung Verbindungen der Formeln (I) (II.a) und (II.b) als Weichmacher.

In einer bevorzugten Ausführungsform umfasst die Weichmacher-Komponente B)
B1) eine oder mehrere Verbindung(en) der Formel (I)
B2) eine oder mehrere Verbindung(en) der Formel (II.a) und
B3) eine oder mehrere Verbindung(en) der Formel (II.b),
wobei die Verbindungen der Formeln (I), (II.a) und (II.b) wie hierin definiert sind.

In den Verbindungen der Formeln (I) (II.a) und (II.b) sind die Gruppen Z, R¹ und R² jeweils gleich oder voneinander verschieden. Bevorzugt sind die Gruppen Z gleich. Besonders bevorzugt sind die Gruppen Z, R² jeweils gleich. Insbesondere bevorzugt sind die Gruppen Z, R¹ und R² jeweils gleich.

In einer Ausführungsform enthält die Polymer-Zusammensetzung genau eine Verbindung der Formel (I), genau eine Verbindung der Formel (II.a) und genau eine Verbindung der Formel (II.b). Dabei können die Gruppen Z, R¹ und R² jeweils gleich oder voneinander verschieden sein. Bevorzugt sind die Gruppen Z gleich. Besonders bevorzugt sind die Gruppen Z, R² jeweils gleich. Insbesondere bevorzugt sind die Gruppen Z, R¹ und R² jeweils gleich.

Durch Anpassung der Anteile der Verbindungen der Formeln (I), (II.a) und (II.b) in der Polymer-Zusammensetzung können die Weichmacher-Eigenschaften auf den entsprechenden Verwendungszweck abgestimmt werden.

Sofern die Polymer-Zusammensetzung zusätzlich zu der wenigstens einen Verbindung der Formel (I) wenigstens eine Verbindung der Formel (II.a) und/oder (II.b) enthält, beträgt bevorzugt der Gehalt an Verbindungen der allgemeinen Formel (I) in der Polymer-Zusammensetzung 10 bis 75 Gew.-%, besonders bevorzugt 20 bis 65 Gew.-% und insbesondere 30 bis 60 Gew.-%, bezogen auf die Gesamtmenge der Verbindungen der Formeln (I), (II.a) und (II.b) in der Polymer-Zusammensetzung.

Sofern die Polymer-Zusammensetzung zusätzlich zu der wenigstens einen Verbindung der Formel (I) wenigstens eine Verbindung der Formel (II.a) oder (II.b) enthält, beträgt bevorzugt der Gehalt der Verbindungen der allgemeinen Formeln (II.a) und (II.b) in der Polymer-Zusammensetzung 25 bis 90 Gew.-%, besonders bevorzugt 35 bis 80 Gew.-% und insbesondere 40 bis 70 Gew.-%, bezogen auf die Gesamtmenge der Verbindungen der Formeln (I), (II.a) und (II.b) der Polymer-Zusammensetzung.

Sofern die Polymer-Zusammensetzung zusätzlich zu der wenigstens einen Verbindung der Formel (I) wenigstens eine Verbindung der Formel (II.a) oder (II.b) enthält, liegt das Gewichtsverhältnis zwischen Verbindungen der Formel (I) und Verbindungen der Formeln (II.a) und (II.b) bevorzugt im Bereich von 10:90 bis 75:25, besonders bevorzugt im Bereich von 20:80 bis 65:35 und insbesondere im Bereich von 30:70 bis 60:40.

### Komponente C)

Für den Einsatz in speziellen Anwendungsbereichen kann es gegebenenfalls hilfreich sein, der erfindungsgemäßen Polymer-Zusammensetzungen weitere von der Komponente B, das heißt von den Verbindungen der Formeln (I), (II.a) und (II.b) verschiedene Weichmacher hinzuzufügen. Aus diesem Grund kann die erfindungsgemäße Polymer-Zusammensetzung gegebenenfalls eine Weichmacher-Komponente C) enthalten, die einen oder mehrere weitere Weichmacher enthält, die ausgewählt sind unter
C1) 1,2-Cyclohexandicarbonsäuredialkylestern,
C2) Phthalsäuredialkylestern und
C3) Terephthalsäuredialkylestern.

Geeignete Verbindungen C1), C2), und C3) sind die im Folgenden genannten.

Geeignete 1,2-Cyclohexandicarbonsäurediestern sind Verbindungen der allgemeinen Formel (III.a), 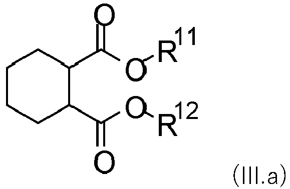 worin R¹¹ und R¹² unabhängig voneinander ausgewählt sind unter verzweigten und unverzweigten C₇-C₁₂-Alkylresten.

Vorzugsweise stehen in den Verbindungen der Formel (III.a) die Reste R¹¹ und R¹² unabhängig voneinander für n-Octyl, n-Nonyl, Isononyl, 2-Ethylhexyl, Isodecyl, 2-Propylheptyl, n-Undecyl oder Isoundecyl.

Besonders bevorzugt sind in den Verbindungen der Formel (III.a) die Reste R¹¹ und R¹² gleich. Insbesondere bevorzugt stehen in den Verbindungen der Formel (III.a) die Reste R¹¹ und R¹² beide für 2-Ethylhexyl, beide für Isononyl oder beide für 2-Propylheptyl.

Eine speziell bevorzugte Verbindung der Formel (III.a) ist Di-(isononyl)-1,2-cyclohexandicarboxylat.

Geeignete Phthalsäurediestern sind Verbindungen der allgemeinen Formel (III.b), 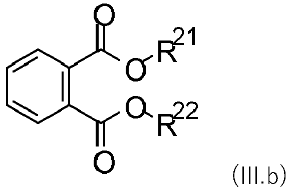 worin R²¹ und R²² unabhängig voneinander ausgewählt sind unter verzweigten und unverzweigten C₉-C₁₂-Alkylresten.

Vorzugsweise stehen in den Verbindungen der allgemeinen Formel (III.b) die Reste R²¹ und R²² unabhängig voneinander für n-Nonyl, Isononyl, n-Decyl, Isodecyl, 2-Propylheptyl, 2-Propyl-4-methylhexyl, 2-Propyl-5-methylhexyl, 2-Isopropyl-heptyl, 2-Isopropyl-4-methylhexyl, 2-Isopropyl-5-methylhexyl, 2-Propyl-4,4-dimethylpentyl, n-Undecyl, Isoundecyl, n-Dodecyl oder Isododecyl, besonders bevorzugt für 2-Propylheptyl, 2-Propyl-4-methylhexyl, 2-Propyl-5-methylhexyl, 2-Isopropyl-heptyl, 2-Isopropyl-4-methylhexyl, 2-Isopropyl-5-methylhexyl oder 2-Propyl-4,4-dimethylpentyl, und insbesondere für 2-Propylheptyl.

Besonders bevorzugt sind in den Verbindungen der Formel (III.b) die Reste R²¹ und R²² gleich. Insbesondere bevorzugt stehen in den Verbindungen der Formel (III.b) die Reste R²¹ und R²² beide für 2-Propylheptyl, beide für 2-Propyl-4-methylhexyl, beide für 2-Propyl-5-methylhexyl, beide für 2-Isopropyl-heptyl, beide für 2-Isopropyl-4-methylhexyl, beide für 2-Isopropyl-5-methylhexyl oder beide für 2-Propyl-4,4-dimethylpentyl.

Eine speziell bevorzugte Verbindung der Formel (III.b) ist Di-(2-propylheptyl)-phthalat.

Geeignete Terephthalsäurediestern sind Verbindungen der allgemeinen Formel (III.c), 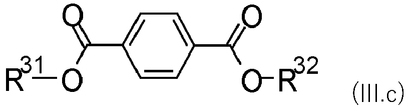 worin R³¹ und R³² unabhängig voneinander ausgewählt sind unter verzweigten und unverzweigten C₄-C₁₂-Alkylresten.

Vorzugsweise stehen in den Verbindungen der Formel (III.c) die Reste R³¹ und R³² unabhängig voneinander für C₇-C₁₂-Alkyl, insbesondere für n-Heptyl, n-Octyl, n-Nonyl, Isononyl, 2-Ethylhexyl, Isodecyl, 2-Propylheptyl, n-Undecyl oder Isoundecyl.

Besonders bevorzugt stehen in den Verbindungen der Formel (III.c) die Reste R³¹ und R³² beide für C₇-C₁₂-Alkyl. Insbesondere bevorzugt stehen in den Verbindungen der Formel (III.c) die Reste R³¹ und R³² beide für 2-Ethylhexyl, beide für Isononyl oder beide für 2-Propylheptyl.

Eine speziell bevorzugte Verbindung der Formel (III.c) ist Di-(2-ethylhexyl)-terephthalat.

In einer Ausführungsform enthält die Polymer-Zusammensetzung keine Weichmacher-Komponente C). Sie enthält somit keinen Weichmacher, der ausgewählt ist unter 1,2-Cyclohexandicarbonsäurediestern, Phthalsäurediestern und Terephthalsäurediestern.

In einer anderen Ausführungsform enthält die Polymer-Zusammensetzung eine Weichmacher-Komponente C), enthaltend einen oder mehrere Weichmacher, der ausgewählt ist unter 1,2-Cyclohexandicarbonsäurediestern, Phthalsäurediestern und Terephthalsäurediestern.

Sofern die Polymer-Zusammensetzung eine Weichmacher-Komponente C) enthält, beträgt der Gehalt der Weichmacher-Komponente C) in der Polymer-Zusammensetzung bevorzugt 1 bis 90 Gew.-%, besonders bevorzugt 10 bis 80 Gew.-% und insbesondere 20 bis 70 Gew.-%, bezogen auf die Gesamtmenge der Komponenten B) und C) in der Polymer-Zusammensetzung.

In einer Ausführungsform enthält die Weichmacher-Komponente C ein Gemisch aus 1,2-Cyclohexandicarbonsäurediestern, Phthalsäurediestern und Terephthalsäurediestern.

In einer weiteren Ausführungsform enthält die Weichmacher-Komponente C) ausschließlich 1,2-Cyclohexandicarbonsäurediester, insbesondere die oben genannten bevorzugten Verbindungen der Formel (III.a).

In einer weiteren Ausführungsform enthält die Weichmacher-Komponente C) ausschließlich Phthalsäurediester, insbesondere die oben genannten bevorzugten Verbindungen der Formel (III.b).

In einer weiteren Ausführungsform enthält die Weichmacher-Komponente C) ausschließlich Terephthalsäurediester, insbesondere die oben genannten bevorzugten Verbindungen der Formel (III.c).

### Weitere Weichmacher

Durch Anpassung der Anteile der Weichmacher-Komponenten können die Weichmacher-Eigenschaften auf den entsprechenden Verwendungszweck abgestimmt werden. Dies kann durch routinemäßige Versuche bewerkstelligt werden.

Für den Einsatz in speziellen Anwendungsbereichen kann es gegebenenfalls hilfreich sein der erfindungsgemäßen Polymer-Zusammensetzungen weitere von den Weichmacher-Komponenten B) und C) verschiedene Weichmacher hinzuzufügen. Aus diesem Grund kann die erfindungsgemäße Polymer-Zusammensetzung gegebenenfalls wenigstens einen weiteren von den Weichmacher-Komponenten B) und C) verschiedenen Weichmacher D) enthalten.

Der von den Verbindungen (I), (II.a) und (II.b) verschiedene zusätzliche Weichmacher der Komponente D) ist ausgewählt unter
- Phthalsäurealkylaralkylestern,
- Trimellitsäuretrialkylestern,
- Benzoesäurealkylestern,
- Dibenzoesäureestern von Glykolen,
- Hydroxybenzoesäureestern,
- Estern von gesättigten Monocarbonsäuren,
- Estern von ungesättigten Monocarbonsäuren,
- Estern von Hydroxymonocarbonsäuren,
- Estern von gesättigten Hydroxydicarbonsäuren,
- Alkylsulfonsäureestern,
- Glycerinestern,
- Isosorbidestern,
- Phosphorsäureestern,
- Citronensäurediestern und Citronensäuretriestern,
- Alkylpyrrolidonderivaten,
- 2,5-Furandicarbonsäureestern,
- 2,5-Tetrahydrofurandicarbonsäureestern,
- epoxidierten Pflanzenölen und epoxidierten Fettsäuremonoalkylestern,
- 1,3-Cyclohexandicarbonsäuredialkylestern,
- 1,4-Cyclohexandicarbonsäuredialkylestern,
- Polyestern aus aliphatischen und/oder aromatischen Polycarbonsäuren mit wenigstens zweiwertigen Alkoholen,
- weiteren Weichmachern.

Ein geeigneter Phthalsäurealkylaralkylester ist beispielsweise Benzylbutylphthalat.

Geeignete Trimellitsäuretrialkylester weisen bevorzugt unabhängig voneinander jeweils 4 bis 13C-Atome, insbesondere 7 bis 11C-Atome, in den Alkylgruppen auf.

Geeignete Benzoesäurealkylester weisen bevorzugt unabhängig voneinander jeweils 7 bis 13C-Atome, insbesondere 9 bis 13C-Atome, in den Alkylgruppen auf. Geeignete Benzoesäurealkylester sind beispielsweise Isononylbenzoat, Isodecylbenzoat oder 2-Propylheptylbenzoat.

Geeignete Dibenzoesäureester von Glykolen sind Diethylenglykoldibenzoat und Dibutylenglykoldibenzoat.

Geeignete Ester von gesättigten Monocarbonsäuren sind beispielsweise Ester der Essigsäure, Buttersäure und Valeriansäure.

Geeignete Ester von gesättigten Hydroxymonocarbonsäuren sind beispielsweise Ester der Milchsäure.

Geeignete Ester von Dicarbonsäuren sind beispielsweise Ester der Azelainsäure und Sebacinsäure

Geeignete Ester von Hydroxydicarbonsäuren sind beispielsweise Ester der Tartronsäure.

Geeignete Alkylsulfonsäureester weisen vorzugsweise einen Alkylrest mit 8 bis 22 C-Atomen auf. Dazu zählen beispielsweise der Phenyl- oder Cresylester der Pentadecylsulfonsäure.

Geeignete Isosorbidester sind Isosorbiddiester, die bevorzugt mit C₈-C₁₃-Carbonsäuren verestert sind.

Geeignete Phosphorsäureester sind Tri-2-ethylhexylphosphat, Trioctylphosphat, Triphenylphosphat, Isodecyldiphenylphosphat, Bis-(2-ethylhexyl)phenyl-phosphat und 2-Ethylhexyldiphenylphosphat.

In geeigneten Citronensäurediestern und Citronensäuretriestern kann die OH-Gruppe in freier oder carboxylierter Form oder acetyliert vorliegen. Bevorzugt ist die OH-Gruppe acyliert. Die Alkylreste der acetylierten Citronensäuretriester weisen bevorzugt unabhängig voneinander 4 bis 8 C-Atome, insbesondere 4 bis 6 C-Atome, auf.

Geeignet sind Alkylpyrrolidonderivate mit Alkylresten von 4 bis 18 C-Atomen.

Geeignete 2,5-Furandicarbonsäuredialkylester weisen unabhängig voneinander jeweils 7 bis 13 C-Atome, bevorzugt 8 bis 12 C-Atome, in den Alkylketten auf.

Geeignete 2,5-Tetrahydrofurandicarbonsäuredialkylester weisen unabhängig voneinander jeweils 7 bis 13 C-Atome, bevorzugt 8 bis 12 C-Atome, in den Alkylketten auf.

Ein geeignetes epoxidiertes Pflanzenöl ist beispielsweise epoxidiertes Sojaöl, z.B. erhältlich von der Firma Galata-Chemicals, Lampertheim, Germany.

Geeignete epoxidierte Fettsäuremonoalkylester sind beispielsweise erhältlich unter dem Handelsnamen reFlex™ der Firma PolyOne, USA.

Geeignete 1,3-Cyclohexandicarbonsäuredialkylester und 1,4-Cyclohexandicarbonsäuredialklyester weisen vorzugsweise unabhängig voneinander Alkylgruppen mit 4 bis 12 C-Atomen auf.

Bei den Polyestern aus aliphatischen und aromatischen Polycarbonsäuren handelt es sich bevorzugt um Polyester der Adipinsäure mit mehrwertigen Alkoholen, insbesondere Dialkylenglykolpolyadipate mit 2 bis 6 Kohlenstoffatomen im Alkylenrest.

In allen zuvor genannten Fällen können die Alkylgruppen jeweils linear oder verzweigt und jeweils gleich oder voneinander verschieden sein. Auf die eingangs gemachten allgemeinen Ausführungen zu geeigneten und bevorzugten Alkylgruppen wird Bezug genommen.

Sofern die Polymer-Zusammensetzung eine Weichmacher-Komponente D) enthält, beträgt bevorzugt der Weichmacher-Komponenten D) in der erfindungsgemäßen Polymer-Zusammensetzung 0 bis 50 Gew.-%, bevorzugt 0 bis 40 Gew.-%, besonders bevorzugt 0 bis 30 Gew.-% und insbesondere 0 bis 25 Gew.-%, bezogen auf die Gesamtmenge der Komponenten B, D) und gegebenenfalls C) in der Polymer-Zusammensetzung.

Falls ein weiterer Weichmacher D) vorhanden ist, dann vorzugsweise in einer Konzentration von wenigstens 0,01 Gew.-%, bevorzugt wenigstens 0,1 Gew.-%, insbesondere wenigstens 1 Gew.-%, bezogen auf die Gesamtmenge der Komponenten B, D) und gegebenenfalls C) in der Polymer-Zusammensetzung.

In einer bevorzugten Ausführungsform enthält die erfindungsgemäße Polymer-Zusammensetzung keinen weiteren, von den Weichmacher-Komponenten B) und C) verschiedenen Weichmacher.

### Mengenverhältnisse

Erfindungsgemäß enthält die Polymer-Zusammensetzung die Weichmacher-Komponente B1). Gegebenenfalls enthält die Polymer-Zusammensetzung zusätzlich die Weichmacher-Komponenten B2), B3), C) und D).

Bevorzugt enthält die Polymer-Zusammensetzung

| | |
|---|---|
| 0,5 bis 99 Gew.-% | der Komponente B1), |
| 1 bis 90 Gew.-% | der Komponente B2) und B3), |
| 0 bis 90 Gew.-% | der Komponente C), |
| 0 bis 50 Gew.-% | der Komponente D), |

bezogen auf die Gesamtmenge der Komponenten B1) und gegebenenfalls B2), B3), C) und D).

Weiter bevorzugt enthält die Polymer-Zusammensetzung

| | |
|---|---|
| 0,5 bis 99 Gew.-% | der Komponente B1), |
| 1 bis 90 Gew.-% | der Komponente B2) und B3), |
| 1 bis 90 Gew.-% | der Komponente C), |
| 0 bis 50 Gew.-% | der Komponente D), |

bezogen auf die Gesamtmenge der Komponenten B1) und gegebenenfalls B2), B3), C) und D).

Noch weiter bevorzugt enthält die Polymer-Zusammensetzung

| | |
|---|---|
| 2 bis 80 Gew.-% | der Komponente B1), |
| 2,5 bis 80 Gew.-% | der Komponente B2 und B3), |
| 10 bis 80 Gew.-% | der Komponente C), |
| 0 bis 40 Gew.-% | der Komponente D), |

bezogen auf die Gesamtmenge der Komponenten B1) und gegebenenfalls B2), B3), C) und D).

In der Polymer-Zusammensetzung beträgt der Gesamtgehalt der Komponenten B1) und gegebenenfalls B2), B3), C) und D) in der Regel 0,5 bis 300 phr (parts per hundred resin = Gewichtsteile pro hundert Gewichtsteile Polymer), bevorzugt 0,5 bis 130 phr, besonders bevorzugt 1 bis 100 phr.

### Polymer-Komponente A)

In einer ersten Ausführungsform der Polymer-Zusammensetzung enthält die Komponenten A) ein oder mehrere Polymer(e) ausgewählt unter PVC Homo- und Copolymeren, mit der Maßgabe, dass die Polymer-Zusammensetzung 50 bis 100 Gew.-%, bezogen auf den Gesamtgehalt an Polymeren der Polymer-Zusammensetzung, wenigstens eines Polymers enthält, welches ausgewählt ist unter PVC Homo- und Copolymeren.

Polyvinylchlorid (PVC) Homopolymere werden durch Homopolymerisation von Vinylchlorid erhalten. Das erfindungsgemäß verwendete PVC kann beispielsweise durch Suspensionspolymerisation, Mikrosuspensionspolymerisation, Emulsionspolymerisation oder Massenpolymerisation hergestellt werden. Die Herstellung von PVC Homopolymeren durch Polymerisation von Vinylchlorid sowie Herstellung und Zusammensetzung von weichgemachtem PVC sind beispielsweise beschrieben in "Becker/Braun, Kunststoff-Handbuch, Band 2/1 : Polyvinylchlorid", 2. Auflage, Carl Hanser Verlag, München.

Polyvinylchlorid (PVC) Copolymere sind aus Vinylchlorid und weiteren davon verschiedenen Comonomeren aufgebaut. Der Anteil an Vinylchlorid beträgt in der Regel wenigstens 20 Gew.-%, bevorzugt wenigstens 50 Gew.-% und besonders bevorzugt wenigstens 80 Gew.-%, bezogen auf das Gesamtgewicht der Monomere. Prinzipiell können die PVC Copolymere ähnlich wie die PVC Homopolymere hergestellt werden.

Geeignete Comonomere sind beispielsweise Monomeren mit einer C-C-Doppelbindung, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten wie beispielsweise Styrol, Acrylnitril, Methacrylnitril, α,β-ethylenisch ungesättigten Mono- und Dicarbonsäuren, und Maleinsäureanhydrid.

Ein übliches weiteres Monomer beispielsweise ist Vinylacetat. Ein übliches PVC-Copolymer ist beispielsweise Polyvinylchloridacetat (PVCA), ein Copolymer aus Vinylchlorid und Vinylacetat.

Weiter übliche Herstellungsverfahren für PVC Homo- und Copolymeren sowie mögliche Comonomere für PVC Copolymeren sind dem Fachmann bekannt.

In ersten Variante enthält die Weichmacher-Komponenten A) ausschließlich Polymerkomponente(n), die ausgewählt sind unter PVC Homo- und Copolymeren.

In einer anderen Variante kann die Weichmacher-Komponente A) eine oder mehrere weitere Polymerkomponente(n), ausgewählt unter thermoplastischen Polymeren und Elastomeren sowie Mischungen davon, enthalten. Bevorzugte thermoplastischen Polymere und Elastomere sind die hierein genannten.

Bevorzugt beträgt der Anteil der Polymerkomponente(n), die ausgewählten unter PVC Homo- und Copolymeren mehr als 20 Gew.-%, besonders bevorzugt mehr als 50 Gew.-%, insbesondere mehr als 80 Gew.-%, bezogen auf die Gesamtmenge der Weichmacherkomponente A).

In einer zweiten Ausführungsform der Polymer-Zusammensetzung enthält die Weichmacher-Komponente A) eine oder mehrere Polymerkomponente(n) ausgewählt unter thermoplastischen Polymeren und Elastomeren sowie Mischungen davon.

Bevorzugt sind die thermoplastischen Polymere ausgewählt unter
- Homo- oder Copolymere, die in einpolymerisierter Form wenigstens ein Monomer enthalten, das ausgewählt ist unter Monomeren mit einer C-C-Doppelbindung,
- Homo- und Copolymere von Vinylacetalen,
- Polyvinylestern,
- Polycarbonaten (PC),
- Polyestern,
- Polyethern,
- Polyetherketonen,
- thermoplastischen Polyurethanen (TPU),
- Polysulfiden,
- Polysulfonen,
- Polyethersulfonen,
- Cellulosealkylestern,
sowie Copolymere und Mischungen davon.

Geeignete Monomeren mit einer C-C-Doppelbindung sind beispielsweise Ethylen, Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten wie beispielsweise Styrol, Acrylnitril, Methacrylnitril, α,β-ethylenisch ungesättigten Mono- und Dicarbonsäuren, und Maleinsäureanhydrid.

Homo- oder Copolymere, die in einpolymerisierter Form wenigstens ein Monomer enthalten, das ausgewählt ist unter Monomeren mit einer C-C-Doppelbindung, sind beispielsweise Polyethylen (PE), Polypropylen (PP), Polybutadien, Polyvinylalkohol (PVAL), Polyvinylacetat (PVA), Polyvinylchlorid (PVC) Homo- und Copolymere, Polyacrylate mit gleichen oder verschiedenen Alkoholresten aus der Gruppe der C₄-C₈-Alkohole, Polystyrol (PS), Polyacrylnitril, und Copolymere davon, sowie Polymethylmethacrylat (PMMA), Methylmethacrylat-Butylacrylat-Copolymere, Acrylnitril-Butadien-Styrol-Copolymere (ABS), Ethylen-Propylen-Copolymere, Ethylen-Propylen-Dien-Copolymere (EPDM), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA).

Homo- und Copolymere von Vinylacetalen sind beispielsweise Polyvinylformal (PVFO), Polyvinylacetaldehyd und Polyvinylbutyral (PVB).

Polycarbonaten (PC) sind beispielsweise Polymere aus Kohlensäure und aliphatischen oder aromatischen Dihydroxy-Verbindungen.

Polyestern sind beispielsweise Polyalkylenterephthalate, Polyhydroxyalkanoate (PHA), Polybutylensuccinate (PBS), Polybutylensuccinatadipate (PBSA), Polycaprolacton (PCL), Polyhydroxybuttersäure (PHB), Polyhydroxyvaleriansäure (PHV) und Polymilchsäure (PLA).

Polyether sind beispielsweise Polyoxymethylen (POM), Polyphenylenether, Polyethylenglykol und Polypropylenglykol.

Polyetherketone sind beispielsweise Polyaryletherketone.

Cellulosealkylestern sind beispielsweise Ethylcellulose (EC), Celluloseacetat (CA), Cellulosepropionat (CP) oder Cellulose-Acetat/Butyrat (CAB).

Bevorzugt sind die Elastomere ausgewählt unter natürlichem Kautschuk (NR) oder auf synthetischem Wege hergestellter Kautschuk oder Mischungen davon.

Bevorzugte auf synthetischem Wege hergestellte Kautschuke sind beispielsweise
- Polyisopren-Kautschuk (IR),
- Styrol-Butadien-Kautschuk (SBR),
- Butadien-Kautschuk (BR),
- Nitril-Butadien-Kautschuk (NBR),
- Chloropren-Kautschuk (CR).

Weiter bevorzugt sind Kautschuke oder Kautschuk-Mischungen, welche sich mit Schwefel vulkanisieren lassen.

### Formmassen

Ein weiterer Gegenstand der Erfindung sind Formmassen, bestehend aus einer oder enthaltend eine Polymer-Zusammensetzung wie hierin definiert.

Die Formmassen können zusätzlich wenigstens ein weiteres Polymer enthalten. Bei dem weiteren Polymer kann es sich um ein thermoplastisches Polymer oder um ein Elastomer oder um eine Mischung davon handeln. In einer bevorzugten Ausführungsform handelt es sich bei dem in der Formmasse enthaltenen Polymer um ein thermoplastisches Polymer.

Üblicherweise beträgt der Gesamtgehalt an Weichmacher der Komponenten B), und falls vorhanden C) und D) in der Formmasse 0,5 bis 300 phr (parts per hundred resin = Gewichtsteile pro hundert Gewichtsteile Polymer), bevorzugt 0,5 bis 130 phr, besonders bevorzugt 1 bis 100 phr.

In einer bevorzugten Ausführungsform bestehen die Formmassen im Wesentlichen aus PVC Homo- und Copolymeren. Diese werden üblicherweise auch als PVC-Formmassen bezeichnet.

Im Wesentlichen bedeutet im Rahmen der vorliegenden Erfindung, dass wenigstens 20 Gew.-%, bezogen auf die Gesamtmenge an Polymer in der Zusammensetzung aus PVC Homo- und Copolymeren besteht. Im Wesentlichen bedeutet bevorzugt wenigstens 50 Gew.-%, weiter bevorzugt wenigstens 80 Gew.-%, weiter bevorzugt wenigstens 90 Gew.-%, weiter bevorzugt wenigstens 95 Gew.-% und weiter bevorzugt wenigstens 98 Gew.-%, bezogen auf die Gesamtmenge an Polymer in der Zusammensetzung.

Weiter bevorzugt bedeutet im Wesentlichen, dass der Gehalt an PVC Homo- und Copolymeren in der Zusammensetzung im Bereich von 20 bis 95 Gew.-%, bevorzugt bei 30 bis 90 Gew.-% und weiter bevorzugt bei 40 bis 85 Gew.-%, bezogen auf die Gesamtmenge der Zusammensetzung, liegt.

Eine spezielle Ausführung sind Formmassen, die PVC Homo- und Copolymere als alleinige Polymerkomponente enthalten.

Der K-Wert, der die Molmasse des PVC charakterisiert und nach DIN EN ISO 1628-2 (November 1999) bestimmt wird, liegt für das erfindungsgemäß weichgemachte PVC meist zwischen 57 und 90, bevorzugt zwischen 61 und 85, insbesondere zwischen 64 und 80.

Sofern die Formmasse PVC Homo- und Copolymere enthält, beträgt der Gesamtgehalt der Komponenten B), und falls vorhanden C) und D) in der Formmasse von 1 bis 300 phr, bevorzugt von 5 bis 150 phr, besonders bevorzugt von 10 bis 130 phr und insbesondere 15 bis 120 phr.

In einer weiteren bevorzugten Ausführungsform handelt es sich bei dem in der Formmasse enthaltenen Polymer um ein Elastomer. Bevorzugte Elastomere sind die hierin genannten.

Sofern die Formmasse von PVC Homo- und Copolymere verschiedene Elastomere enthält, beträgt der Gehalt an Elastomer in den erfindungsgemäßen Formmassen von 20 bis 95 Gew.-%, bevorzugt von 45 bis 90 Gew.-%und insbesondere von 50 bis 85 Gew.-%, bezogen auf der Gesamtgewicht der Zusammensetzung.

Im Rahmen der Erfindung können die Formmassen, welche wenigstens ein Elastomer enthalten, zusätzlich zu den vorstehenden Bestandteilen andere geeignete Zusatzstoffe enthalten. Beispielsweise können verstärkende Füllstoffe, wie Ruß oder Siliciumdioxid, weitere Füllstoffe, ein Methylendonor, wie Hexamethylentetramin (HMT), ein Methylenakzeptor, wie mit Cardanol (aus Cashew-Nüssen) modifizierte Phenolharze, ein Vulkanisier- oder Vernetzungsmittel, ein Vulkanisier- oder Vernetzungsbeschleuniger, Aktivatoren, verschiedene Typen von Öl, Alterungsschutzmittel und andere verschiedene Zusatzstoffe, die beispielsweise in Reifen- und anderen Kautschukmassen eingemischt werden, enthalten sein.

Sofern die Formmasse Kautschuke enthält, beträgt der Gesamtgehalt der Komponenten B), gegebenenfalls C) und gegebenenfalls D) in der Formmasse von 1 bis 60 phr, bevorzugt 1 bis 40 phr, besonders bevorzugt 2 bis 30 phr.

### Zusatzstoffe Formmasse

Im Rahmen der Erfindung können die Formmassen andere geeignete Zusatzstoffe enthalten. Beispielsweise können Stabilisatoren, Gleitmittel, Füllstoffe, Pigmente, Flamminhibitoren, Lichtstabilisatoren, Treibmittel, polymere Verarbeitungshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Formmassen dar, sondern dienen lediglich der Erläuterung. Alle Angaben zum Gehalt sind in Gew.-%-Angaben bezogen auf die gesamte Formmasse.

Als Stabilisatoren kommen alle üblichen PVC-Stabilisatoren in fester und flüssiger Form in Betracht, beispielsweise übliche Ca/Zn-, Ba/Zn-, Pb- oder Sn-Stabilisatoren sowie auch säurebindende Schichtsilikate, wie Hydrotalcit.

Die erfindungsgemäßen Formmassen können einen Gehalt an Stabilisatoren von 0,05 bis 7 %, bevorzugt 0,1 bis 5 %, besonders bevorzugt von 0,2 bis 4 % und insbesondere von 0,5 bis 3 % aufweisen.

Gleitmittel vermindern die Haftung zwischen den zu verarbeitenden Kunststoffen und Metalloberflächen und dienen dazu, Reibungskräften beim Mischen, Plastifizieren und Verformen entgegenwirken.

Als Gleitmittel können die erfindungsgemäßen Formmassen alle die für die Verarbeitung von Kunststoffen üblichen Gleitmittel enthalten. In Betracht kommen beispielsweise Kohlenwasserstoffe, wie Öle, Paraffine und PE-Wachse, Fettalkohole mit 6 bis 20 Kohlenstoffatomen, Ketone, Carbonsäuren, wie Fettsäuren und Montansäure, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die erfindungsgemäßen Formmassen können einen Gehalt an Gleitmittel von 0,01 bis 10 %, bevorzugt 0,05 bis 5 %, besonders bevorzugt von 0,1 bis 3 % und insbesondere von 0,2 bis 2 % aufweisen.

Füllstoffe beeinflussen vor allem die Druck-, Zug-, und Biegefestigkeit sowie die Härte und Wärmeformbeständigkeit von weichgemachtem PVC in positiver Weise.

Im Rahmen der Erfindung können die Formmassen auch Füllstoffe, wie beispielsweise Ruß und andere anorganische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat enthalten. Vorzugsweise werden als Füllstoffe Calciumcarbonate, Kreide, Dolomit, Kaolin, Silikate, Talkum oder Ruß eingesetzt.

Die erfindungsgemäßen Formmassen können einen Gehalt an Füllstoffen von 0,01 bis 80 %, bevorzugt 0,1 bis 60 %, besonders bevorzugt von 0,5 bis 50 % und insbesondere von 1 bis 40 % aufweisen.

Die erfindungsgemäßen Formmassen können auch Pigmente enthalten, um das erhaltene Produkt an unterschiedliche Einsatzmöglichkeiten anzupassen.

Im Rahmen der vorliegenden Erfindung können sowohl anorganische Pigmente als auch organische Pigmente eingesetzt werden. Als anorganische Pigmente können beispielsweise Kobalt-Pigmente, beispielsweise CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente, Dioxazinpigmente und Diketopyrrolopyrrol-Pigmente in Betracht.

Die erfindungsgemäßen Formmassen können einen Gehalt an Pigmenten von 0,01 bis 10 %, bevorzugt 0,05 bis 5 %, besonders bevorzugt von 0,1 bis 3 % und insbesondere von 0,5 bis 2 % aufweisen.

Um die Entflammbarkeit zu vermindern und die Rauchentwicklung beim Verbrennen zu verringern, können die erfindungsgemäßen Formmassen auch Flamminhibitoren enthalten.

Als Flamminhibitoren können beispielsweise Antimontrioxid, Phosphatester, Chlorparaffin, Aluminiumhydroxid oder Borverbindungen verwendet werden.

Die erfindungsgemäßen Formmassen können einen Gehalt an Flamminhibitoren von 0,01 bis 10 %, bevorzugt 0,1 bis 8 %, besonders bevorzugt von 0,2 bis 5 % und insbesondere von 0,5 bis 2 % aufweisen.

Um aus den erfindungsgemäßen Formmassen hergestellte Artikel vor einer Schädigung im Oberflächenbereich durch den Einfluss von Licht zu schützen, können die Formmassen auch Lichtstabilisatoren wie zum Beispiel UV-Absorber enthalten.

Als Lichtstabilisatoren können im Rahmen der vorliegenden Erfindung beispielsweise Hydroxybenzophenone, Hydroxyphenylbenzotriazole, Cyanoacrylate oder sogenannte "hindered amine light stabilizers" (HALS), wie die Derivate von 2,2,6,6-Tetramethylpiperidin, eingesetzt werden.

Die erfindungsgemäßen Formmassen können einen Gehalt an Lichtstabilisatoren, z.B. UV-Absorber, von 0,01 bis 7 %, bevorzugt 0,1 bis 5 %, besonders bevorzugt von 0,2 bis 4 % und insbesondere von 0,5 bis 3 % aufweisen.

### Plastisole

Ein weiterer Gegenstand der Erfindung sind Plastisole, bestehend aus oder enthaltend eine Polymer-Zusammensetzung wie hierin definiert.

Bei Plastisolen handelt es sich im Rahmen dieser Erfindung um eine Suspension von feinpulvrigen Polymeren in der erfindungsgemäßen Polymer-Zusammensetzung. Geeignete Polymere sind die zuvor genannten Polymere, insbesondere thermoplastische Polymere. Auf geeignete und bevorzugte Polymere wird hier in vollem Umfang auf die unter Formmassen genannten Bezug genommen.

Die Plastisole liegen üblicherweise in flüssiger Form vor. Die Plastisole gelieren unter bestimmten Voraussetzungen irreversibel.

In einer bevorzugten Ausführungsform bestehen die Plastisole im Wesentlichen aus PVC Homo- und Copolymeren. Diese werden üblicherweise auch als PVC-Plastisole bezeichnet.

Im Wesentlichen bedeutet im Rahmen der vorliegenden Erfindung, dass wenigstens 20 Gew.-%, bezogen auf die Gesamtmenge an Polymer in der Zusammensetzung aus PVC Homo- und Copolymeren besteht. Im Wesentlichen bedeutet bevorzugt wenigstens 50 Gew.-%, weiter bevorzugt wenigstens 80 Gew.-%, weiter bevorzugt wenigstens 90 Gew.-%, weiter bevorzugt wenigstens 95 Gew.-% und weiter bevorzugt wenigstens 98 Gew.-%, bezogen auf die Gesamtmenge an Polymer in der Zusammensetzung.

Eine spezielle Ausführung sind Plastisole, die PVC als alleinige Polymerkomponente enthalten.

Üblicherweise beträgt der Gesamtgehalt der Komponenten B), gegebenenfalls C) und gegebenenfalls D) in den Plastisolen von 5 bis 300 phr, bevorzugt 30 bis 200 phr.

Plastisole werden üblicherweise bei Umgebungstemperatur durch verschiedene Verfahren, wie Streichverfahren, Siebdruckverfahren, Gießverfahren, wie das Schalengieß- oder Rotationsgießverfahren, Tauchverfahren, Spritzverfahren und dergleichen in die Form des fertigen Produkts gebracht. Anschließend erfolgt durch Erwärmung die Gelierung, wobei nach Abkühlung ein homogenes, mehr oder weniger flexibles Produkt erhalten wird.

### Verwendungen und Anwendungen

Die erfindungsgemäßen Polymer-Zusammensetzungen, Formmassen und Plastisole werden bevorzugt für die Herstellung von Formkörpern und Folien verwendet.

Die erfindungsgemäßen Polymer-Zusammensetzungen, Formmassen und Plastisole werden beispielsweise verwendet für Gehäuse von Elektrogeräten, wie beispielsweise Küchengeräten und Computergehäuse, Werkzeuge, Apparate, Rohrleitungen, Kabel, Schläuche, wie beispielsweise Kunststoffschläuche, Wasser- und Bewässerungsschläuche, Industrie-Schläuche aus Elastomeren oder Chemieschläuche, Draht-Ummantelungen, Fensterprofile, Komponenten für den Fahrzeugbau, wie beispielsweise Karosseriebestandteile, KfZ-Innenraumausstattung, Vibrationsdämpfer für Motoren, Reifen, Möbel, wie beispielsweise Stühle, Tische oder Regale, Schaumstoff für Polster und Matratzen, Planen, wie beispielsweise LKW-Planen oder Zeltplanen, Dichtungen, Verbundfolien, wie Folien für Verbundsicherheitsglas, insbesondere für Fahrzeug- und Fensterscheiben, Kunstleder, Verpackungsbehälter, geschäumte oder nicht geschäumte Tapeten, Klebebandfolien und Beschichtungen.

Daneben eignen sich die erfindungsgemäßen Polymer-Zusammensetzungen, Formmassen und Plastisole für die Herstellung von Formkörpern und Folien, die direkt mit Menschen oder Nahrungsmitteln in Kontakt kommen.

Dabei handelt es sich vorwiegend um Medizinprodukte, Hygieneprodukte, Lebensmittelverpackungen, Produkte für den Innenraumbereich, Spielzeug und Kinderpflegeartikel, Sport- und Freizeitprodukte, Bekleidung, Fasern für Gewebe und dergleichen.

Die erfindungsgemäßen Polymer-Zusammensetzungen, Formmassen und Plastisole werden beispielsweise verwendet für Medizinprodukten wie beispielsweise um Schläuche für enterale Ernährung oder Hämodialyse, Beatmungsschläuche, Drainageschläuche, Infusionsschläuche, Infusionsbeutel, Blutbeutel, Katheter, Trachealtuben, Einmalspritzen, Handschuhe und Atemmasken.

Die erfindungsgemäßen Polymer-Zusammensetzungen, Formmassen und Plastisole werden beispielsweise verwendet für Folien wie beispielsweise Planen, wie LKW-Planen, Dachplanen, Geomembranen, Stadiondächer oder Zeltplanen, Dichtungen, Selbstklebefolien, Kaschierfolien, Schrumpffolien, Bodenbeläge für den Außenbereich, Tischdecken, Klebebandfolien, Beschichtungen, Schwimmteichfolien, Zierteichfolien und Kunstleder.

Die erfindungsgemäßen Polymer-Zusammensetzungen, Formmassen und Plastisole werden beispielsweise verwendet für Lebensmittelverpackungen wie beispielsweise Frischhaltefolien, Lebensmittelschläuche, Trinkwasserschläuche, Behälter zur Aufbewahrung oder zum Einfrieren von Lebensmitteln, Deckeldichtungen, Verschlusskappen, Kronkorken oder künstliche Weinkorken.

Die erfindungsgemäßen Polymer-Zusammensetzungen, Formmassen und Plastisole werden beispielsweise verwendet für Produkten für den Innenraumbereich wie beispielsweise Bodenbeläge, welche homogen oder aus mehreren Schichten, bestehend aus mindestens einer geschäumten Schicht, aufgebaut sein können, wie beispielsweise Fußbodenbeläge, Sportböden oder Luxury Vinyl Tiles (LVT), Kunstleder, Wandbeläge oder geschäumte oder nicht geschäumte Tapeten in Gebäuden und Verkleidungen oder Konsolenabdeckungen in Fahrzeugen.

Die erfindungsgemäßen Polymer-Zusammensetzungen, Formmassen und Plastisole werden beispielsweise verwendet für Baby- und Kinderprodukte, Kinderpflegeartikel und Spielzeug wie beispielsweise Puppen, aufblasbares Spielzeug, Bälle, Spielfiguren, Knete, Stoppersocken, Schwimmhilfen, Kinderwagen-Abdeckhauben, Wickelauflagen, Wärmflaschen, Beißringe und Fläschchen.

Die erfindungsgemäßen Polymer-Zusammensetzungen, Formmassen und Plastisole werden beispielsweise verwendet für Sport und Freizeitprodukten wie beispielsweise Gymnastikbälle, Übungsmatten, Sitzkissen, Vibratoren, Massagebälle und -rollen, Schuhe, Schuhsohlen, Bälle, Luftmatratzen, Sicherheitsbrillen, Handschuhe und Trinkflaschen.

Die erfindungsgemäßen Polymer-Zusammensetzungen, Formmassen und Plastisole werden beispielsweise verwendet für Bekleidung wie beispielsweise Latex-Kleidung, Schutzbekleidung, Regenjacken und Gummistiefel.

Daneben eignen sich die erfindungsgemäßen Polymer-Zusammensetzungen, Formmassen und Plastisole für die Herstellung von nahtlosen Hohlkörpern, Handschuhen und zur Anwendung im Textilbereich und für Textilbeschichtungen.

Daneben eignen sich die erfindungsgemäßen Polymer-Zusammensetzungen, Formmassen und Plastisole, insbesondere PVC-Plastisole, zur Produktion von künstlichem Leder, Unterbodenschutz für Kraftfahrzeuge, Nahtabdichtungen, Teppichrückseitenbeschichtungen, schwere Beschichtungen, Förderbänder, Tauchbeschichtungen und mittels Tauchverfahren hergestellte Artikel, Spielzeug, anatomische Modelle für die Ausbildung, Bodenbeläge, Wandbeläge, beschichtete Textilien, Planen, Zelte, Bandbeschichtungen, Dachbahnen, Dichtungsmassen für Verschlüsse, Atemmasken und Handschuhe.

Bei dem künstlichen Leder handelt es sich beispielsweise um künstliches Leder für den Kraftfahrzeugbau oder Handtaschen.

Bei dem Spielzeug handelt es sich beispielsweise um Puppen, Bälle oder Spielzeugtiere
Bei den Textilien handelt es sich beispielsweise um Latex-Kleidung, Schutzbekleidung oder Regenkleidung wie Regenjacken.

Ein weiterer Gegenstand der Erfindung ist die Verwendung einer Polymer-Zusammensetzung wie hierein als Hilfsmittel oder/und in Hilfsmitteln, ausgewählt unter: Kalandrierhilfsmitteln, Rheologiehilfsmitteln, oberflächenaktive Zusammensetzungen, Schmierstoffen, Quenchern für chemische Reaktionen, Phlegmatisierungsmitteln, pharmazeutischen Produkten, Weichmachern in Klebstoffen oder Dichtstoffen, Schlagzähmodifizierern und Stellmitteln.

Bei den oberflächenaktiven Zusammensetzungen handelt es sich beispielsweise um Fließbindehilfen, Filmbildehilfen, Entschäumer, Schaumverhüter, Benetzungsmittel, Koaleszenzmittel und Emulgatoren.

Bei den Schmierstoffen handelt es sich beispielsweise um Schmierölen, Schmierfetten und Schmierpasten.

### Herstellung der Verbindungen der Formeln (I), (II.a) und (II.b)

Üblicherweise werden die Verbindungen der allgemeinen Formeln (I), (II.a) und (II.b) durch Veresterung oder durch Umesterung hergestellt.

### Veresterung

Die Herstellung der Verbindungen der Formeln (I), (II.a) und (II.b) kann durch Veresterung entsprechender aliphatischer Dicarbonsäuren mit den entsprechenden aliphatischen Alkoholen nach üblichen dem Fachmann bekannten Verfahren erfolgen. Dazu zählt die Umsetzung wenigstens einer Alkoholkomponente, ausgewählt aus den Alkoholen R¹-OH bzw. R²-OH, mit einer Dicarbonsäure der allgemeinen Formel HO-C(=O)-Z-C(=O)-OH oder einem geeigneten Derivat davon. Geeignete Derivate sind z. B. die Säurehalogenide und Säureanhydride. Ein bevorzugtes Säurehalogenid ist das Säurechlorid. Als Veresterungskatalysatoren können die dafür üblichen Katalysatoren eingesetzt werden, z. B. Mineralsäuren, wie Schwefelsäure und Phosphorsäure, organische Sulfonsäuren, wie Methansulfonsäure und p-Toluolsulfonsäure, amphotere Katalysatoren, insbesondere Titan-, Zinn(IV)- oder Zirkoniumverbindungen, wie Tetraalkoxytitane, z. B. Tetrabutoxytitan, und Zinn(IV)-oxid. Das bei der Reaktion entstehende Wasser kann durch übliche Maßnahmen, z. B. destillativ, entfernt werden. Die WO 02/38531 beschreibt ein Verfahren zur Herstellung von Estern multibasischer Carbonsäuren, bei dem man a) in einer Reaktionszone ein im Wesentlichen aus der Säurekomponente oder einem Anhydrid davon und der Alkoholkomponente bestehendes Gemisch in Gegenwart eines Veresterungskatalysators zum Sieden erhitzt, b) die Alkohol und Wasser enthaltenden Dämpfe rektifikativ in eine alkoholreiche Fraktion und eine wasserreiche Fraktion auftrennt, c) die alkoholreiche Fraktion in die Reaktionszone zurückführt und die wasserreiche Fraktion aus dem Verfahren ausleitet. Das in der WO 02/38531 beschriebene Verfahren sowie die darin offenbarten Katalysatoren eignen sich ebenfalls für die Veresterung.

Der Veresterungskatalysator wird in einer wirksamen Menge eingesetzt, die üblicherweise im Bereich von 0,05 bis 10 Gew.-%, vorzugsweise 0,1 bis 5 Gew.-%, bezogen auf die Summe von Säurekomponente (oder Anhydrid) und Alkoholkomponente, liegt.

Weitere geeignete Verfahren zur Herstellung der Verbindungen der Formeln (I), (II.a) und (II.b) mittels Veresterung sind beispielsweise in der US 6,310,235, US 5,324,853, DE 2612355 (Derwent Abstract Nr. DW 77-72638 Y) oder DE-A 1945359 (Derwent Abstract Nr. DW 73-27151 U). Auf die genannten Dokumente wird in vollem Umfang Bezug genommen.

In der Regel erfolgt die Veresterung der Dicarbonsäure HO-C(=O)-Z-C(=O)-OH in Anwesenheit der oben beschriebenen Alkoholkomponenten R¹-OH bzw. R²-OH mittels einer organischen Säure oder Mineralsäure, insbesondere konzentrierter Schwefelsäure. Dabei wird die Alkoholkomponente vorteilhafterweise wenigstens in der doppelten stöchiometrischen Menge, bezogen auf die Menge an Dicarbonsäure HO-C(=O)-Z-C(=O)-OH oder einem geeigneten Derivat davon in der Reaktionsmischung, eingesetzt.

Die Veresterung kann in der Regel bei Umgebungsdruck oder vermindertem oder erhöhtem Druck erfolgen. Bevorzugt wird die Veresterung bei Umgebungsdruck oder vermindertem Druck durchgeführt.

Die Veresterung kann in Abwesenheit eines zugesetzten Lösungsmittels oder in Gegenwart eines organischen Lösungsmittels durchgeführt werden.

Falls die Veresterung in Gegenwart eines Lösungsmittels durchgeführt wird, handelt es sich dabei vorzugsweise um ein unter den Reaktionsbedingungen inertes organisches Lösungsmittel. Dazu gehören beispielsweise aliphatische Kohlenwasserstoffe, halogenierte aliphatische Kohlenwasserstoffe, aromatische und substituierte aromatische Kohlenwasserstoffe oder Ether. Bevorzugt ist das Lösungsmittel ausgewählt unter Pentan, Hexan, Heptan, Ligroin, Petrolether, Cyclohexan, Dichlormethan, Trichlormethan, Tetrachlormethan, Benzol, Toluol, Xylol, Chlorbenzol, Dichlorbenzolen, Dibutylether, THF, Dioxan und Mischungen davon.

Die Veresterung wird üblicherweise in einem Temperaturbereich von 50 bis 250 ° C durchgeführt. Ist der Veresterungskatalysator ausgewählt unter organischen Säuren oder Mineralsäuren, wird die Veresterung üblicherweise in einem Temperaturbereich von 50 bis 160° C durchgeführt. Ist der Veresterungskatalysator ausgewählt unter amphoteren Katalysatoren, wird die Veresterung üblicherweise in einem Temperaturbereich von 100 bis 250° C durchgeführt.

Die Veresterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht.

### Umesterung

Die Herstellung der Verbindungen der Formeln (I), (II.a) und (II.b) kann durch Umesterung von Estern, die von den Estern der Formeln (I), (II.a) und (II.b) verschieden sind, mit den entsprechenden aliphatischen Alkoholen nach üblichen dem Fachmann bekannten Verfahren erfolgen. Dazu zählt die Umsetzung der Di-(C₁-C₂)-Alkylester der Dicarbonsäuren HO-C(=O)-Z-C(=O)-OH mit wenigstens einem Alkohol R¹-OH bzw. R²-OH oder Gemischen davon in Anwesenheit eines geeigneten Umesterungskatalysators.

Als Umesterungskatalysatoren kommen die üblichen gewöhnlich für Umesterungsreaktionen verwendeten Katalysatoren in Betracht, die meist auch bei Veresterungsreaktionen eingesetzt werden. Hierzu zählen z. B. Mineralsäuren, wie Schwefelsäure und Phosphorsäure, organische Sulfonsäuren, wie Methansulfonsäure und p-Toluolsulfonsäure oder spezielle Metallkatalysatoren aus der Gruppe der Zinn(IV)-Katalysatoren, beispielsweise Dialkylzinndicarboxylate wie Dibutylzinndiacetat, Trialkylzinnalkoxide, Monoalkylzinnverbindungen wie Monobutylzinndioxid, Zinnsalze wie Zinnacetat oder Zinnoxide, aus der Gruppe der Titankatalysatoren, monomere und polymere Titanate und Titanchelate wie Tetraethylorthotitanat, Tetrapropylorthotitanat, Tetrabutylorthotitanat, Triethanolamintitanat, aus der Gruppe der Zirkonkatalysatoren, Zirkonate und Zirkonchelate wie Tetrapropylzirkonat, Tetrabutylzirkonat, Triethanolaminzirkonat, sowie Lithiumkatalysatoren wie Lithiumsalze, Lithiumalkoxide, oder Aluminium(III)-, Chrom(III)-, Eisen(III)-, Kobalt(II)-, Nickel(II) und Zink(II)-acetylacetonat.

Die Menge an eingesetztem Umesterungskatalysator liegt bei 0,05 bis 5 Gew.-%, bevorzugt bei 0,1 bis 1 Gew.-%. Das Reaktionsgemisch wird bevorzugt bis zum Siedepunkt des Reaktionsgemisches erhitzt, so dass die Reaktionstemperatur in Abhängigkeit von den Reaktanten zwischen 20° C und 200° C liegt.

Die Umesterung kann bei Umgebungsdruck oder vermindertem oder erhöhtem Druck erfolgen. Bevorzugt wird die Umesterung bei einem Druck im Bereich von 0,001 bis 200 bar, besonders bevorzugt im Bereich von 0,01 bis 5 bar, durchgeführt. Der bei der Umesterung abgespaltene, niedriger siedende Alkohol wird zwecks Verschiebung des Gleichgewichts der Umesterungsreaktion bevorzugt kontinuierlich abdestilliert. Die hierzu benötigte Destillationskolonne steht in der Regel in direkter Verbindung mit dem Umesterungsreaktor, vorzugsweise ist sie direkt an diesem installiert. Im Falle der Verwendung mehrerer in Serie geschalteter Umesterungsreaktoren, kann jeder dieser Reaktoren mit einer Destillationskolonne ausgerüstet sein oder es kann, vorzugsweise aus den letzten Kesseln der Umesterungsreaktorkaskade, das abgedampfte Alkoholgemisch über eine oder mehrere Sammelleitungen einer Destillationskolonne zugeführt werden. Der bei dieser Destillation zurückgewonnene höhersiedende Alkohol wird vorzugsweise wieder in die Umesterung zurückgeführt.

Im Falle der Verwendung eines amphoteren Katalysators gelingt dessen Abtrennung im Allgemeinen durch Hydrolyse und anschließende Abtrennung des gebildeten Metalloxids, z. B. durch Filtration. Bevorzugt wird nach erfolgter Reaktion der Katalysator mittels Waschen mit Wasser hydrolysiert und das ausgefallene Metalloxid abfiltriert. Gewünschtenfalls kann das Filtrat einer weiteren Aufarbeitung zur Isolierung und/oder Reinigung des Produkts unterzogen werden. Bevorzugt wird das Produkt destillativ abgetrennt.

Die Umesterung der Di-(C₁-C₂)-Alkylester der Dicarbonsäuren HO-C(=O)-Z-C(=O)-OH mit wenigstens einem Alkohol R¹-OH bzw. R²-OH oder Gemischen davon erfolgt bevorzugt in Gegenwart wenigstens eines Titan(IV)-Alkoholats. Bevorzugte Titan(IV)-Alkoholate sind Tetrapropoxytitan, Tetrabutoxytitan oder Gemische davon. Bevorzugt wird die Alkoholkomponente wenigstens in der doppelten stöchiometrischen Menge, bezogen auf die eingesetzten Di-(C₁-C₂-Alkyl)-Ester eingesetzt.

Die Umesterung kann in Abwesenheit oder in Gegenwart eines zugesetzten organischen Lösungsmittels durchgeführt werden. Bevorzugt wird die Umesterung in Gegenwart eines inerten organischen Lösungsmittels durchgeführt. Geeignete organische Lösungsmittel sind die zuvor für die Veresterung genannten. Dazu zählen speziell Toluol und THF.

Die Temperatur bei der Umesterung liegt vorzugsweise in einem Bereich von 50 bis 200° C.

Die Umesterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht. Bevorzugt wird die Umesterung ohne Hinzufügen eines Inertgases durchgeführt.

Die zur Herstellung der Verbindungen der Formeln (I), (II.a) und (II.b) eingesetzten aliphatischen Dicarbonsäuren und Alkohole können entweder kommerziell erworben oder nach literaturbekannten Synthesewegen hergestellt werden.

Michael Tuttle Musser in "Cyclohexanol and Cyclohexanone" in "Ullmann's Encyclopedia of Industrial Chemistry" (2011) (DOI: 10.1002/14356007.a08_217.pub2) offenbart technische Synthesewege zur großtechnischen Gewinnung von Cyclohexanol. Cyclohexanol kann grundsätzlich über den Weg der Hydrierung von Phenol in der Gasphase gewonnen werden oder durch eine katalysierte Oxidation von Cyclohexan mit Hilfe von Übergangsmetallkatalysatoren in der flüssigen Phase durch Luftsauerstoff. Cyclohexanol kann selektiver und in höheren Ausbeuten erhalten werden indem man Borsäure in der flüssigen Phase verwendet und mit Hilfe von ebenfalls Luftsauerstoff oxidiert. Dieser letztere Prozess geht über die Zwischenstufe eines Peroxoborsäureesters des Cyclohexanols. Darüber hinaus ist ebenfalls ein Prozess, ausgehend von Benzol im großtechnischen Maßstab realisiert. Dabei wird Benzol schrittweise hydriert und Cyclohexen von den Nebenkomponenten, wie nicht umgesetztes Benzol und Cyclohexan, abgetrennt. In einem katalysierten Schritt wird anschließend Cyclohexen sehr selektiv und in großen Ausbeuten (bis zu 95 % über alle Schritte) zu Cyclohexanol umgesetzt.

Michael Tuttle Musser, in "Adipic Acid" in "Ullmann's Encyclopedia of Industrial Chemistry" (2000) (DOI: 10.1002/14356007.a01_269) offenbart technische Synthesewege zur großtechnischen Gewinnung von Adipinsäure. Heutzutage wird fast der weltweit gesamte Bedarf an Adipinsäure über den Weg der Oxidation von entweder Cyclohexanol oder Cyclohexanon oder einer Mischung davon mit Hilfe von Salpetersäure gedeckt.

### Alkanole

Im Rahmen der vorliegenden Anmeldung ist hinsichtlich der im folgenden genannten Alkanolen unter dem Begriff "Isoalkohol" ein Gemisch von Strukturisomeren zu verstehen, sofern nichts anderes angegeben ist.

### Heptanol

Die zur Herstellung der Ester-Verbindungen eingesetzten Heptanole können geradkettig oder verzweigt sein oder aus Gemischen aus geradkettigen und verzweigten Heptanolen bestehen. Bevorzugt werden Gemische aus verzweigten Heptanolen, auch als Isoheptanol bezeichnet, verwendet, die durch die Rhodium- oder vorzugsweise Kobalt-katalysierte Hydroformylierung von Dimerpropen, erhältlich z. B. nach dem Dimersol®-Verfahren, und anschließende Hydrierung der erhaltenen Isoheptanale zu einem Isoheptanol-Gemisch hergestellt werden. Entsprechend seiner Herstellung besteht das so gewonnene Isoheptanol-Gemisch aus mehreren Isomeren. Im Wesentlichen geradkettige Heptanole können durch die Rhodium- oder vorzugsweise Kobalt-katalysierte Hydroformylierung von 1-Hexen und anschließende Hydrierung des erhaltenen n-Heptanals zu n-Heptanol erhalten werden. Die Hydroformylierung von 1-Hexen bzw. Dimerpropen kann nach an sich bekannten Verfahren erfolgen: Bei der Hydroformylierung mit homogen im Reaktionsmedium gelösten Rhodiumkatalysatoren können sowohl unkomplexierte Rhodiumcarbonyle, die in situ unter den Bedingungen der Hydroformylierungsreaktion im Hydroformylierungsreaktionsgemisch unter Einwirkung von Synthesegas z. B. aus Rhodiumsalzen gebildet werden, als auch komplexe Rhodiumcarbonylverbindungen, insbesondere Komplexe mit organischen Phosphinen, wie Triphenylphosphin, oder Organophosphiten, vorzugsweise chelatisierenden Biphosphiten, wie z. B. in US-A 5288918 beschrieben, als Katalysator verwendet werden. Bei der Kobalt-katalysierten Hydroformylierung dieser Olefine werden im Allgemeinen homogen im Reaktionsgemisch lösliche Kobaltcarbonyl-Verbindungen eingesetzt, die sich unter den Bedingungen der Hydroformylierungsreaktion unter Einwirkung von Synthesegas in situ aus Kobaltsalzen bilden. Wird die Kobalt-katalysierte Hydroformylierung in Gegenwart von Trialkyl- oder Triarylphosphinen ausgeführt, bilden sich als Hydroformylierungsprodukt direkt die gewünschten Heptanole, so dass keine weitere Hydrierung der Aldehydfunktion mehr benötigt wird.

Zur Kobalt-katalysierten Hydroformylierung des 1-Hexens bzw. der Hexenisomerengemische eignen sich beispielsweise die in Falbe, New Syntheses with Carbon Monoxide, Springer, Berlin, 1980 auf den Seiten 162-168, erläuterten industriell etablierten Verfahren, wie das Ruhrchemie-Verfahren, das BASF-Verfahren, das Kuhlmann-Verfahren oder das Shell-Verfahren. Während das Ruhrchemie-, BASF- und das Kuhlmann-Verfahren mit nicht ligandmodifizierten Kobaltcarbonyl-Verbindungen als Katalysatoren arbeiten und dabei Hexanal-Gemische erhalten, verwendet das Shell-Verfahren (DE-A 1593368) Phosphin- oder Phosphit-Ligand-modifizierte Kobaltcarbonyl-Verbindungen als Katalysator, die aufgrund ihrer zusätzlichen hohen Hydrieraktivität direkt zu den Hexanolgemischen führen. Vorteilhafte Ausgestaltungen zur Durchführung der Hydroformylierung mit nicht-ligandmodifizierten Kobaltcarbonylkomplexen werden in DE-A 2139630, DE-A 2244373, DE-A 2404855 und WO 01014297 detailliert beschrieben.

Zur Rhodium-katalysierten Hydroformylierung des 1-Hexens bzw. der Hexenisomerengemische kann das industriell etablierte Rhodium-Niederdruck-Hydroformylierungs-verfahren mit Triphenylphosphinligand-modifizierten Rhodiumcarbonylverbindungen angewandt werden, wie es Gegenstand von US-A 4148830 ist. Vorteilhaft können zur Rhodium-katalysierten Hydroformylierung langkettiger Olefine, wie der nach den vorstehend genannten Verfahren erhaltenen Hexenisomerengemische, nicht-ligandmodifizierte Rhodiumcarbonylverbindungen als Katalysator dienen, wobei im Unterschied zum Niederdruckverfahren ein höherer Druck von 80 bis 400 bar einzustellen ist. Die Durchführung solcher Rhodium-Hochdruck-Hydroformylierungsverfahren wird in z. B. EP-A 695734, EP-B 880494 und EP-B 1047655 beschrieben.

Die nach Hydroformylierung der Hexen-Isomerengemische erhaltenen Isoheptanalgemische werden auf an sich herkömmliche Weise zu Isoheptanolgemischen katalytisch hydriert. Bevorzugt werden hierzu heterogene Katalysatoren verwendet, die als katalytisch aktive Komponente Metalle und/oder Metalloxide der VI. bis VIII. sowie der I. Nebengruppe des Periodensystems der Elemente, insbesondere Chrom, Molybdän, Mangan, Rhenium, Eisen, Kobalt, Nickel und/oder Kupfer, gegebenenfalls abgeschieden auf einem Trägermaterial wie Al₂O₃, SiO₂ und/oder TiO₂, enthalten. Solche Katalysatoren werden z. B. in DE-A 3228881, DE-A 2628987 und
DE-A 2445303 beschrieben. Besonders vorteilhaft wird die Hydrierung der Isoheptanale mit einem Überschuss an Wasserstoff von 1,5 bis 20 % über der stöchiometrisch zur Hydrierung der Isoheptanale benötigten Wasserstoffmenge, bei Temperaturen von 50 bis 200 ° C und bei einem Wasserstoffdruck von 25 bis 350 bar durchgeführt und zur Vermeidung von Nebenreaktionen dem Hydrierzulauf gemäß
DE-A 2628987 eine geringe Menge Wasser, vorteilhaft in Form einer wässrigen Lösung eines Alkalimetallhydroxids oder -carbonats entsprechend der Lehre von WO 01087809 zugefügt.

### Octanol

2-Ethylhexanol, das für lange Jahre der in den größten Mengen produzierte Weichmacheralkohol war, kann über die Aldolkondensation von n-Butyraldehyd zu 2-Ethylhexenal und dessen anschließende Hydrierung zu 2-Ethylhexanol gewonnen werden (s. Ullmann's Encyclopedia of Industrial Chemistry; 5. Auflage, Bd. A 10, S. 137 - 140, VCH Verlagsgesellschaft GmbH, Weinheim 1987).

Im Wesentlichen geradkettige Octanole können durch die Rhodium- oder vorzugsweise Kobalt-katalysierte Hydroformylierung von 1-Hepten und anschließende Hydrierung des erhaltenen n-Octanals zu n-Octanol erhalten werden. Das dazu benötigte 1-Hepten kann aus der Fischer-Tropsch-Synthese von Kohlenwasserstoffen gewonnen werden.

Bei dem Alkohol Isooctanol handelt es sich im Unterschied zu 2-Ethylhexanol oder n-Octanol, bedingt durch seine Herstellungsweise, nicht um eine einheitliche chemische Verbindung, sondern um ein Isomerengemisch aus unterschiedlich verzweigten C₈-Alkoholen, beispielsweise aus 2,3-Dimethyl-1-hexanol, 3,5-Dimethyl-1-hexanol, 4,5-Dimethyl-1-hexanol, 3-Methyl-1-heptanol und 5-Methyl-1-heptanol, die je nach den angewandten Herstellungsbedingungen und -verfahren in unterschiedlichen Mengenverhältnissen im Isooctanol vorliegen können. Isooctanol wird üblicherweise durch die Codimerisierung von Propen mit Butenen, vorzugsweise n-Butenen, und anschließende Hydroformylierung des dabei erhaltenen Gemisches aus Heptenisomeren hergestellt. Das bei der Hydroformylierung erhaltene Octanal-Isomerengemisch kann anschließend auf an sich herkömmliche Weise zum Isooctanol hydriert werden.

Die Codimerisierung von Propen mit Butenen zu isomeren Heptenen kann vorteilhaft mit Hilfe des homogenkatalysierten Dimersol®-Verfahrens (Chauvin et al; Chem. Ind.; Mai 1974, S. 375-378) erfolgen, bei dem als Katalysator ein löslicher Nickel-Phosphin-Komplex in Gegenwart einer Ethylaluminiumchlor-Verbindung, beispielsweise Ethylaluminiumdichlorid, dient. Als Phosphin-Liganden für den Nickelkomplex-Katalysator können z. B. Tributylphosphin, Tri-isopropylphosphin, Tricyclohexylphosphin und/oder Tribenzylphosphin eingesetzt werden. Die Umsetzung findet bei Temperaturen von 0 bis 80° C statt, wobei vorteilhaft ein Druck eingestellt wird, bei dem die Olefine im flüssigen Reaktionsgemisch gelöst vorliegen (Cornils; Hermann: Applied Homogeneous Catalysis with Organometallic Compounds; 2. Auflage; Bd. 1; S. 254-259, Wiley-VCH, Weinheim 2002).

Alternativ zum mit homogen im Reaktionsmedium gelösten Nickelkatalysatoren betriebenen Dimersol®-Verfahren kann die Codimerisierung von Propen mit Butenen auch mit auf einem Träger abgeschiedenen, heterogenen NiO-Katalysatoren durchgeführt werden, wobei ähnliche Hepten-Isomerenverteilungen erhalten werden wie beim homogen katalysierten Verfahren. Solche Katalysatoren werden beispielsweise im so genannten Octol®-Verfahren (Hydrocarbon Processing, Februar 1986, S. 31-33) verwendet, ein gut geeigneter spezifischer Nickel-Heterogenkatalysator zur Olefindimerisierung bzw. Codimerisierung ist z. B. in WO 9514647 offenbart.

Anstelle von Katalysatoren auf Basis von Nickel können auch Brønsted-acide heterogene Katalysatoren zur Codimerisierung von Propen mit Butenen verwendet werden, wobei in der Regel höher verzweigte Heptene als in den Nickelkatalysierten Verfahren erhalten werden. Beispiele von hierfür geeigneten Katalysatoren sind feste Phosphorsäure-Katalysatoren z. B. mit Phosphorsäure imprägnierte Kieselgur oder Diatomeenerde, wie sie vom PolyGas®-Verfahren zur Olefindi- bzw. Oligomerisierung benutzt werden (Chitnis et al; Hydrocarbon Engineering 10, Nr. 6, Juni 2005). Zur Codimerisierung von Propen und Butenen zu Heptenen sehr gut geeignete Brønsted-acide Katalysatoren sind Zeolithe, deren sich das auf Basis des PolyGas®-Verfahrens weiterentwickelte EMOGAS®-Verfahren bedient.

Das 1-Hepten und die Hepten-Isomerengemische werden nach den vorstehend in Zusammenhang mit der Herstellung von n-Heptanal und Heptanal-Isomerengemische erläuterten bekannten Verfahren mittels Rhodium- oder Kobalt-katalysierter Hydroformylierung, vorzugsweise Kobalt-katalysierter Hydroformylierung, in n-Octanal bzw. Octanal-Isomerengemische überführt. Diese werden anschließend z. B. mittels eines der vorstehend in Zusammenhang mit der n-Heptanol- und Isoheptanol-Herstellung genannten Katalysatoren zu den entsprechenden Octanolen hydriert.

### Nonanol

Im Wesentlichen geradkettiges Nonanol kann durch die rhodium- oder vorzugsweise kobaltkatalysierte Hydroformylierung von 1-Octen und nachfolgende Hydrierung des dabei erhaltenen n-Nonanals erhalten werden. Das Ausgangsolefin 1-Octen kann beispielsweise über eine Ethylenoligomerisierung mittels einem homogen im Reaktionsmedium - 1,4-Butandiol - löslichen Nickelkomplexkatalysator mit z. B. Diphenylphosphinoessigsäure oder 2-Diphenylphosphinobenzoesäure als Liganden erhalten werden. Dieses Verfahren ist auch unter der Bezeichnung Shell Higher Olefins Process oder SHOP-Verfahren bekannt (s. Weisermel, Arpe: Industrielle Organische Chemie; 5. Auflage; S. 96; Wiley-VCH, Weinheim 1998).

Bei Isononanol, welches zur Synthese der in der erfindungsgemäßen Zusammensetzung enthaltenen Diisononylester eingesetzt wird, handelt es sich nicht um eine einheitliche chemische Verbindung, sondern um ein Gemisch aus unterschiedlich verzweigten isomeren C₉-Alkoholen, die je nach der Art ihrer Herstellung, insbesondere auch der verwendeten Ausgangsstoffe, unterschiedliche Verzweigungsgrade haben können. Im Allgemeinen werden die Isononanole durch Dimerisierung von Butenen zu Isooctengemischen, anschließende Hydroformylierung der Isooctengemische und Hydrierung der dabei erhaltenen Isononanalgemische zu Isononanolgemischen hergestellt, wie in Ullmann's Encyclopedia of Industrial Chemistry, 5. Auflage, Bd. A1, S. 291 - 292, VCH Verlagsgesellschaft GmbH, Weinheim 1995, erläutert.

Als Ausgangsmaterial zur Herstellung der Isononanole können sowohl Isobuten, cis- und trans-2-Buten als auch 1-Buten oder Gemische dieser Butenisomere verwendet werden. Bei der vorwiegend mittels flüssiger, z. B. Schwefel- oder Phosphorsäure, oder fester, z. B. auf Kieselgur, SiO₂ oder Al₂O₃ als Trägermaterial aufgebrachter Phosphorsäure oder Zeolithe oder Brønsted-Säuren katalysierten Dimerisierung von reinem Isobuten, wird überwiegend das stark verzweigte 2,4,4-Trimethylpenten, auch als Diisobutylen bezeichnet, erhalten, das nach Hydroformylierung und Hydrierung des Aldehyds hochverzweigte Isononanole liefert.

Bevorzugt sind Isononanole mit einem geringeren Verzweigungsgrad. Solche gering verzweigten Isononanol-Gemische werden aus den linearen Butenen 1-Buten, cis- und/oder trans-2-Buten, die gegebenenfalls noch geringere Mengen an Isobuten enthalten können, über den vorstehend beschriebenen Weg der Butendimerisierung, Hydroformylierung des Isooctens und Hydrierung der erhaltenen Isononanal-Gemische hergestellt. Ein bevorzugter Rohstoff ist das so genannte Raffinat II, das aus dem C₄-Schnitt eines Crackers, beispielsweise eines Steamcrackers, das nach Eliminierung von Allenen, Acetylenen und Dienen, insbesondere 1,3-Butadien, durch dessen Partialhydrierung zu linearen Butenen oder dessen Abtrennung durch Extraktivdestillation, beispielsweise mittels N-Methylpyrrolidon, und nachfolgender Brønsted-Säure katalysierter Entfernung des darin enthaltenen Isobutens durch dessen Umsetzung mit Methanol oder Isobutanol nach großtechnisch etablierten Verfahren unter Bildung des Kraftstoffadditivs Methyl-tert.-Butylether (MTBE) oder des zur Gewinnung von Rein-Isobuten dienenden Isobutyl-tert.-Butylether, gewonnen wird.

Raffinat II enthält neben 1-Buten und cis- und trans-2-Buten noch n- und isoButan und Restmengen von bis zu 5 Gew.-% an Isobuten.

Die Dimerisierung der linearen Butene oder des im Raffinat II enthaltenen Butengemischs kann mittels der gängigen, großtechnisch praktizierten Verfahren, wie sie vorstehend in Zusammenhang mit der Erzeugung von Isoheptengemischen erläutert wurden, beispielsweise mittels heterogener, Brønsted-acider Katalysatoren, wie sie im PolyGas®- oder EMOGAS®-Verfahren eingesetzt werden, mittels des Dimersol®-Verfahrens unter Verwendung homogen im Reaktionsmedium gelöster Nickel-Komplex-Katalysatoren oder mittels heterogener, Nickel(II)oxid-haltiger Katalysatoren nach dem Octol®-Verfahren oder dem Verfahren gemäß WO 9514647 durchgeführt werden. Die dabei erhaltenen Isoocten-Gemische werden nach den vorstehend in Zusammenhang mit der Herstellung von Heptanal-Isomerengemische erläuterten bekannten Verfahren mittels Rhodium- oder Kobalt-katalysierter Hydroformylierung, vorzugsweise Kobalt-katalysierter Hydroformylierung, in Isononanal-Gemische überführt. Diese werden anschließend z. B. mittels einem der vorstehend in Zusammenhang mit der Isoheptanol-Herstellung genannten Katalysatoren zu den geeigneten Isononanolgemischen hydriert.

Die so hergestellten Isononanol-Isomerengemische können über ihren Isoindex charakterisiert werden, der aus dem Verzweigungsgrad der einzelnen isomeren Isononanolkomponenten im Isononanolgemisch multipliziert mit deren prozentualen Anteil im Isononanolgemisch errechnet werden kann. So tragen z. B. n-Nonanol mit dem Wert 0, Methyloctanole (eine Verzweigung) mit dem Wert 1 und Dimethylheptanole (zwei Verzweigungen) mit dem Wert 2 zum Isoindex eines Isononanolgemisches bei. Je höher die Linearität, desto niedriger ist der Isoindex des betreffenden Isononanolgemisches. Dementsprechend kann der Isoindex eines Isononanolgemisches durch gaschromatographische Auftrennung des Isononanolgemisches in seine einzelnen Isomere und damit einhergehender Quantifizierung von deren prozentualen Mengenanteil im Isononanolgemisch, bestimmt nach Standardmethoden der gaschromatographischen Analyse, ermittelt werden. Zwecks Erhöhung der Flüchtigkeit und Verbesserung der gaschromatographischen Auftrennung der isomeren Nonanole werden diese zweckmäßigerweise vor der gaschromatographischen Analyse mittels Standardmethoden, beispielsweise durch Umsetzung mit N-Methyl-N-trimethylsilyltrifluoracetamid, trimethylsilyliert. Um eine möglichst gute Trennung der einzelnen Komponenten bei der gaschromatographischen Analyse zu erzielen, werden vorzugsweise Kapillarsäulen mit Polydimethylsiloxan als stationärer Phase verwendet. Solche Kapillarsäulen sind im Handel erhältlich, und es bedarf lediglich einiger weniger Routineversuche des Fachmanns, um aus dem vielfältigen Angebot des Handels ein optimal für diese Trennaufgabe geeignetes Fabrikat auszuwählen.

Die in der erfindungsgemäßen Zusammensetzung verwendeten Diisononylester sind im Allgemeinen mit Isononanolen mit einem Isoindex von 0,8 bis 2, vorzugsweise von 1,0 bis 1,8 und besonders bevorzugt von 1,1 bis 1,5 verestert, die nach den vorstehend genannten Verfahren hergestellt werden können.

Lediglich beispielhaft werden im Folgenden mögliche Zusammensetzungen von Isononanolgemischen angegeben, wie sie zur Herstellung der erfindungsgemäß eingesetzten Ester-Verbindungen verwendet werden können, wobei anzumerken ist, dass die Anteile der im Einzelnen aufgeführten Isomeren im Isononanolgemisch abhängig von der Zusammensetzung des Ausgangsmaterials, beispielsweise Raffinat II, dessen Zusammensetzung an Butenen produktionsbedingt variieren kann und von Schwankungen in den angewandten Produktionsbedingungen, beispielsweise dem Alter der benutzten Katalysatoren und daran anzupassenden Temperatur- und Druckbedingungen, variieren können.

Beispielsweise kann ein Isononanolgemisch, das durch Kobalt-katalysierte Hydroformylierung und anschließende Hydrierung aus einem unter Verwendung von Raffinat II als Rohstoff mittels des Katalysators und Verfahrens gemäß WO 9514647 erzeugten Isooctengemisches hergestellt wurde, folgende Zusammensetzung haben:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6-Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen;
mit der Maßgabe, dass die Gesamtsumme der genannten Komponenten 100 Gew.-% ergibt.

Entsprechend den vorstehenden Ausführungen kann ein Isononanolgemisch, das durch Kobalt-katalysierte Hydroformylierung und anschließende Hydrierung unter Verwendung eines Ethylen-haltigen Butengemisches als Rohstoff mittels des PolyGas®- oder EMOGAS®-Verfahrens erzeugten Isooctengemisches hergestellt wurde, im Bereich der folgenden Zusammensetzungen, abhängig von der Rohstoffzusammensetzung und Schwankungen der angewandten Reaktionsbedingungen variieren:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
mit der Maßgabe, dass die Gesamtsumme der genannten Komponenten 100 Gew.-% ergibt.

### Decanol

Bei Isodecanol, welches zur Synthese der in der erfindungsgemäßen Zusammensetzung enthaltenen Diisodecylester eingesetzt wird, handelt es sich nicht um eine einheitliche chemische Verbindung, sondern um ein komplexes Gemisch unterschiedlich verzweigter isomerer Decanole.

Diese werden im Allgemeinen durch die Nickel- oder Brønsted-Säure-katalysierte Trimerisierung von Propylen, beispielsweise nach dem vorstehend erläuterten PolyGas®- oder dem EMOGAS®-Verfahren, nachfolgende Hydroformylierung des dabei erhaltenen Isononen-Isomerengemisches mittels homogener Rhodium- oder Kobaltcarbonyl-Katalysatoren, vorzugsweise mittels Kobaltcarbonyl-Katalysatoren und Hydrierung des entstandenen Isodecanal-Isomerengemisches, z. B. mittels der vorstehend in Zusammenhang mit der Herstellung von C₇-C₉-Alkoholen genannten Katalysatoren und Verfahren (Ullmann's Encyclopedia of Industrial Chemistry; 5. Auflage, Bd. A1, S. 293, VCH Verlagsgesellschaft GmbH, Weinheim 1985), hergestellt. Das so produzierte Isodecanol ist im Allgemeinen stark verzweigt.

Bei 2-Propylheptanol, welches zur Synthese der in der erfindungsgemäßen Zusammensetzung enthaltenen Di(2-propylheptyl)ester eingesetzt wird, kann es sich um reines 2-Propylheptanol handeln oder um Propylheptanol-Isomerengemische, wie sie im Allgemeinen bei der industriellen Herstellung von 2-Propylheptanol gebildet werden und gemeinhin ebenfalls als 2-Propylheptanol bezeichnet werden.

Reines 2-Propylheptanol kann durch Aldolkondensation von n-Valeraldehyd und nachfolgende Hydrierung des dabei gebildeten 2-Propylheptenals, beispielsweise gemäß US-A 2921089, erhalten werden. Im Allgemeinen enthält kommerziell erhältliches 2-Propylheptanol neben der Hauptkomponente 2-Propylheptanol herstellungsbedingt eines oder mehrere der 2-Propylheptanol-Isomeren 2-Propyl-4-methylhexanol, 2-Propyl-5-methylhexanol, 2-Isopropyl-heptanol, 2-Isopropyl-4-methylhexanol, 2-Isopropyl-5-methylhexanol und/oder 2-Propyl-4,4-dimethylpentanol. Die Anwesenheit anderer Isomere des 2-Propylheptanols, beispielsweise 2-Ethyl-2,4-dimethylhexanol, 2-Ethyl-2-methyl-heptanol und/oder 2-Ethyl-2,5-dimethylhexanol im 2-Propylheptanol, ist möglich, aufgrund der geringen Bildungsraten der aldehydischen Vorläufer dieser Isomere im Zuge der Aldolkondensation sind diese, wenn überhaupt, nur in Spurenmengen im 2-Propylheptanol enthalten und spielen für die Weichmachereigenschaften des aus solchen 2-Propyheptanol-Isomerengemischen hergestellten Verbindungen praktisch keine Rolle.

Als Ausgangsmaterial zur Herstellung von 2-Propylheptanol können verschiedenerlei Kohlenwasserstoffquellen benutzt werden, beispielsweise 1-Buten, 2-Buten, Raffinat I - ein aus dem C₄-Schnitt eines Crackers nach Abtrennung von Allenen, Acetylenen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet die Verbindung 2-Methylbutanal - gebildet wird, dessen n/iso-Verhältnis je nach verwendetem Katalysator und Hydroformylierungsbedingungen in relativ weiten Grenzen variieren kann. Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10:1 bis 20:1 gebildet, wohingegen bei Verwendung von mit Phosphit-Liganden, beispielsweise gemäß US-A 5288918 oder WO 05028407, oder von mit Phosphoamidit-Liganden, beispielsweise gemäß WO 0283695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligand-modifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen C₅-Aldehyde, d. h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der C₁₀-Alkoholkomponente der erfindungsgemäß eingesetzten Estergemische zu beeinflussen und zu steuern. Desgleichen ist es möglich, das C₅-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie einer wässrigen Lösung von Natrium- oder Kaliumhydroxid, beispielsweise nach den in EP-A 366089, US-A 4426524 oder US-A 5434313 beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer C₅-Aldehyde ein Isomerengemisch aus den Produkten der Homoaldolkondensation gleicher Aldehydmoleküle und der gekreuzten Aldolkondensation unterschiedlicher Valeraldehyd-Isomere geformt wird. Selbstverständlich kann die Aldolkondensation durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren, beispielsweise den vorstehend zur Hydrierung von Aldehyden genannten, zu den entsprechenden Alkoholen oder Alkoholgemischen hydriert werden.

Wie bereits erwähnt, können die in der erfindungsgemäßen Zusammensetzung enthaltenen Ester-Verbindungen mit reinem 2-Propylheptanol verestert sein. Im Allgemeinen werden zur Herstellung dieser Ester jedoch Gemische des 2-Propylheptanols mit den genannten Propylheptanol-Isomeren eingesetzt, in denen der Gehalt an 2-Propylheptanol mindestens 50 Gew.-%, vorzugsweise 60 bis 98 Gew.-% und besonders bevorzugt 80 bis 95 Gew.-%, insbesondere 85 bis 95 Gew.-% beträgt.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-Isopropylheptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen von 2-Propylheptanol mit den Propylheptanol-Isomeren umfassen solche mit 85 bis 95 Gew.-% 2-Propylheptanol, 5 bis 12 Gew.-% 2-Propyl-4-methyl-hexanol und 0,1 bis 2 Gew.-% 2-Propyl-5-methylhexanol und 0,01 bis 1 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bei Verwendung der genannten 2-Propylheptanol-Isomerengemische anstelle von reinem 2-Propylheptanol zur Herstellung der Verbindungen der allgemeinen Formel (I) und/oder (II) entspricht die Isomerenzusammensetzung der Alkylestergruppen bzw. Alkylethergruppen praktisch der Zusammensetzung der zur Veresterung verwendeten Propylheptanol-Isomerengemische.

### Undecanol

Die Undecanole, die zur Herstellung der in der erfindungsgemäßen Zusammensetzung enthaltenen Ester-Verbindungen eingesetzt werden, können geradkettig oder verzweigt sein oder aus Gemischen geradkettiger und verzweigter Undecanole zusammengesetzt sein. Bevorzugt werden Gemische aus verzweigten Undecanolen, auch als Isoundecanol bezeichnet, als Alkoholkomponente verwendet.

Im Wesentlichen geradkettiges Undecanol kann durch die Rhodium- oder vorzugsweise Kobalt-katalysierte Hydroformylierung von 1-Decen und nachfolgende Hydrierung des dabei erhaltenen n-Undecanals erhalten werden. Das Ausgangsolefin 1-Decen wird über das zuvor bei der Herstellung von 1-Octen erwähnte SHOP-Verfahren hergestellt.

Zur Herstellung verzweigten Isoundecanols kann das im SHOP-Verfahren erhaltene 1-Decen einer Skelettisomerisierung, z. B. mittels acider zeolithischer Molekularsiebe, wie in WO 9823566 beschrieben, unterzogen werden, wobei sich Gemische aus isomeren Decenen bilden, deren Rhodium- oder vorzugsweise Kobalt-katalysierte Hydroformylierung und nachfolgende Hydrierung der erhaltenen Isoundecanal-Gemische zu dem zur Herstellung der erfindungsgemäß eingesetzten Ester-Verbindungen verwendeten Isoundecanols führt. Die Hydroformylierung von 1-Decen oder Isodecen-Gemischen mittels Rhodium- oder Kobalt-Katalyse kann wie zuvor in Zusammenhang mit der Synthese von C₇- bis C₁₀-Alkoholen beschrieben erfolgen. Entsprechendes gilt für die Hydrierung von n-Undecanal oder Isoundecanal-Gemischen zu n-Undecanol bzw. Isoundecanol.

Nach destillativer Reinigung des Austrags der Hydrierung können die so erhaltenen C₇- bis C₁₁-Alkylalkohole bzw. deren Gemische, wie vorstehend beschrieben, zur Herstellung der erfindungsgemäß eingesetzten Ester-Verbindungen verwendet werden.

### Dodecanol

Im Wesentlichen geradkettiges Dodecanol kann in vorteilhafter Weise über das Alfol®- oder Epal®-Verfahren gewonnen werden. Diese Verfahren beinhalten die Oxidation und Hydrolyse geradkettiger Trialkylaluminium-Verbindungen, welche ausgehend von Triethylaluminium schrittweise über mehrere Ethylierungsreaktionen unter Verwendung von Ziegler-Natta-Katalysatoren aufgebaut werden. Aus den daraus resultierenden Gemischen weitgehend geradkettiger Alkylalkohole unterschiedlicher Kettenlänge kann nach dem destillativen Austrag der C₁₂-Alkylalkohol-Fraktion das gewünschte n-Dodecanol erhalten werden.

Alternativ kann n-Dodecanol auch durch Hydrogenierung natürlicher Fettsäuremethylester, beispielsweise aus Kokosnussöl, hergestellt werden.

Verzweigtes Isododecanol kann analog zu den bekannten Verfahren zur Codimerisierung und/oder Oligomerisierung von Olefinen, wie beispielsweise in der WO 0063151 beschrieben, mit nachfolgender Hydroformylierung und Hydrierung der Isoundecen-Gemische, wie beispielsweise in der DE-A 4339713 beschrieben, erhalten werden. Nach destillativer Reinigung des Austrags der Hydrierung können die so erhaltenen Isododecanole bzw. deren Gemische, wie vorstehend beschrieben, zur Herstellung der erfindungsgemäß eingesetzten Ester-Verbindungen verwendet werden.

### FIGURENBESCHREIBUNG

Figur 1

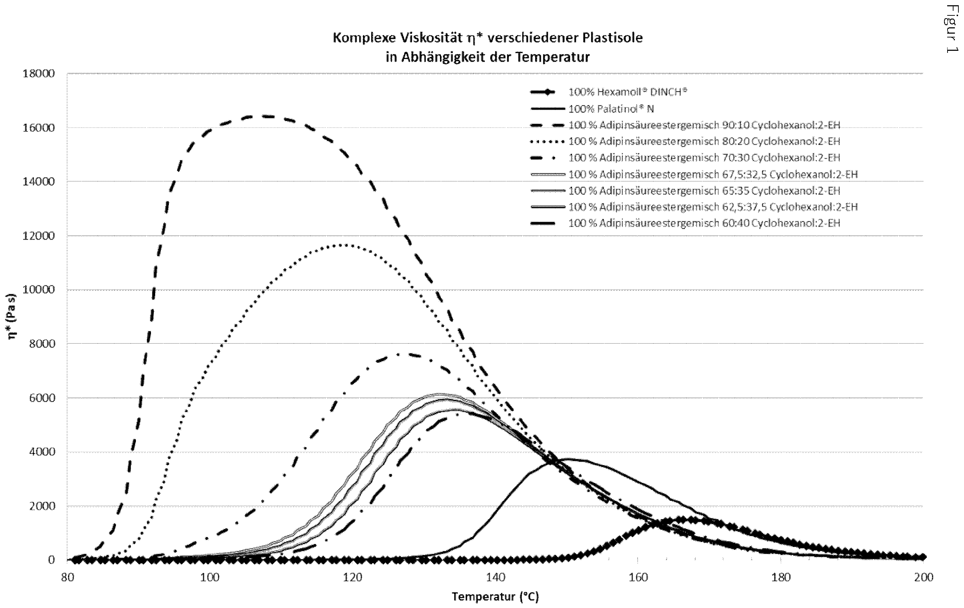

   Figur 1 zeigt das Gelierverhalten von PVC-Plastisolen, die als Weichmacher-Komponente Adipinsäureestergemische mit 2-Ethylhexanol und Cyclohexanol als Alkoholkomponente enthalten, sowie von Vergleichs-PVC-Plastisolen, enthaltend Hexamoll® DINCH® oder Palatinol® N.
Figur 2

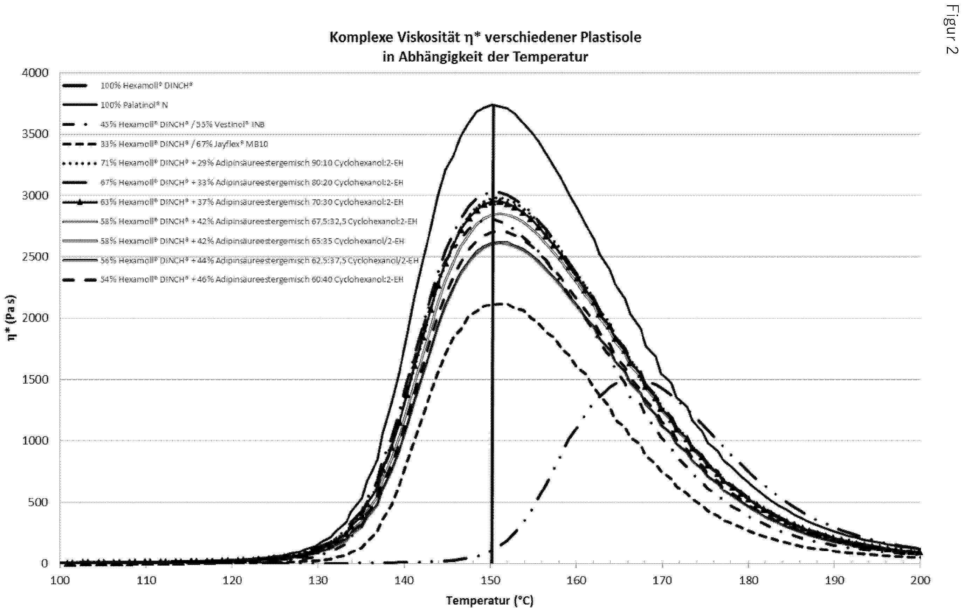

   Figur 2 zeigt das Gelierverhalten von PVC-Plastisolen, die als Weichmacher-Komponente verschiedene Gemische von Hexamoll DINCH® und Adipinsäureestergemischen mit 2-Ethylhexanol und Cyclohexanol als Alkoholkomponente enthalten, sowie von Vergleichs-PVC-Plastisolen, enthaltend Hexamoll® DINCH® oder Palatinol® N.
Figur 3

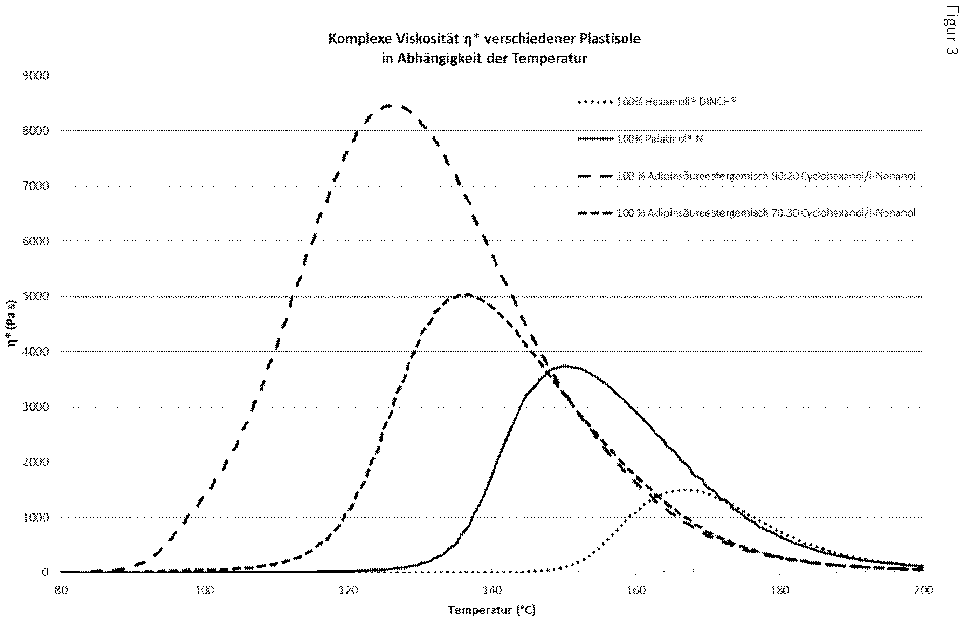

   Figur 3 zeigt das Gelierverhalten von PVC-Plastisolen, die als Weichmacher-Komponente Adipinsäureestergemischen mit Isononanol und Cyclohexanol als Alkoholkomponente enthalten, sowie von Vergleichs-PVC-Plastisolen, enthaltend Hexamoll® DINCH® oder Palationol® N.
Figur 4

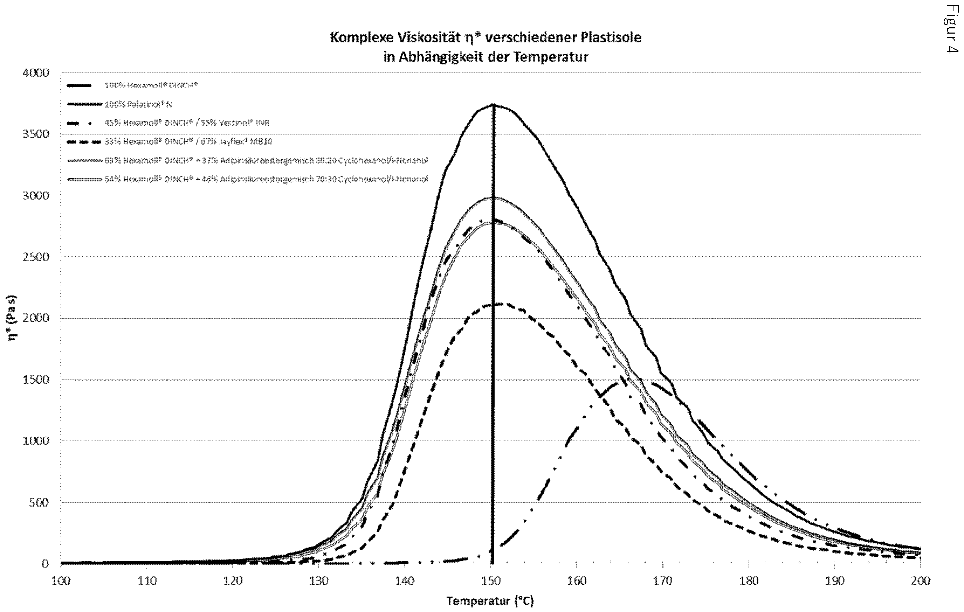

   Figur 4 zeigt das Gelierverhalten von PVC-Plastisolen, die als Weichmacher-Komponente verschiedene Gemische von Hexamoll DINCH® und Adipinsäureestergemischen mit Isononanol und Cyclohexanol als Alkoholkomponente enthalten, sowie von Vergleichs-PVC-Plastisolen, enthaltend Hexamoll® DINCH® oder Palatinol® N.
Figur 5

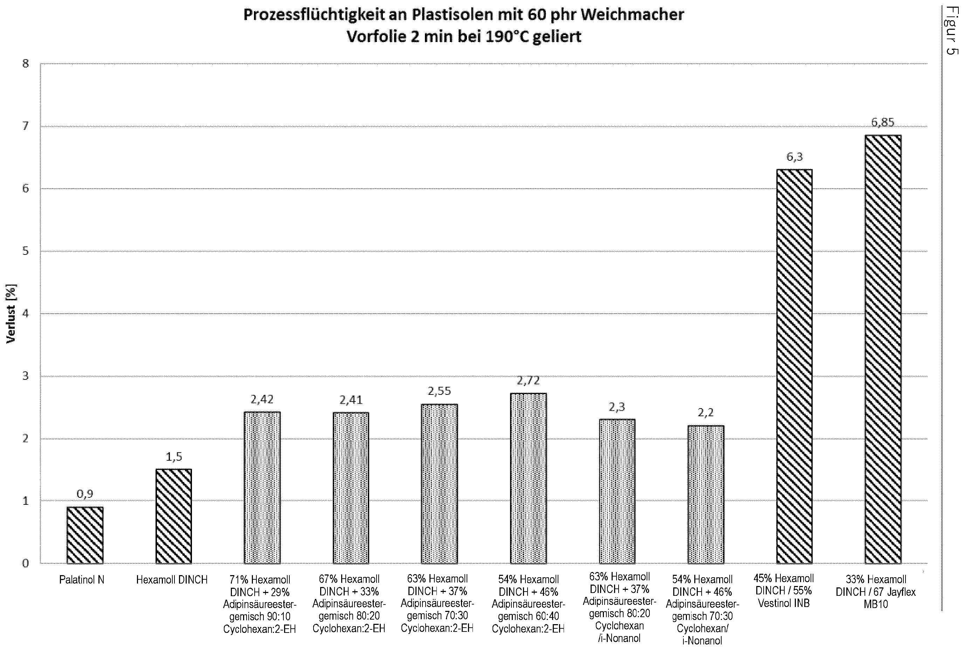

   Figur 5 zeigt die Prozessflüchtigkeit von PVC-Plastisolen, die als Weichmacher-Komponente jeweils verschiedene Gemische von Hexamoll® DINCH® und Adipinsäureestergemischen enthalten, sowie von Vergleichs-PVC-Plastisolen, enthaltend Palatinol® N, Hexamoll® DINCH®, ein Gemisch aus Hexamoll® DINCH® und Vestinol INB oder ein Gemisch aus Hexamoll® DINCH® und Jayflex MB10.
Figur 6

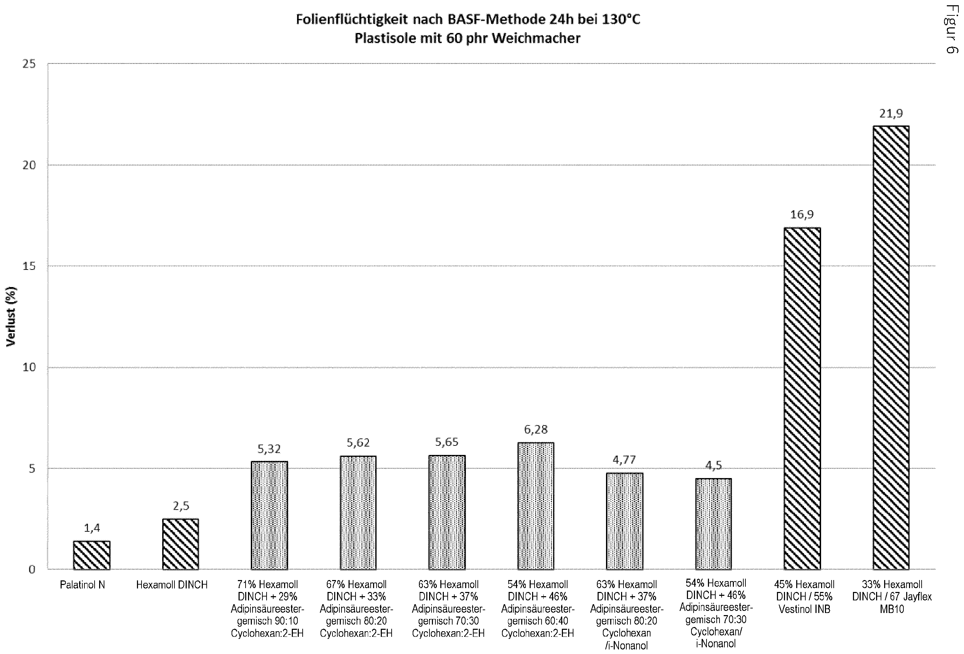

   Figur 6 zeigt die Folienflüchtigkeit von PVC-Folien hergestellt aus Plastisolen, die als Weichmacher-Komponente verschiedene Gemische von Hexamoll DINCH® und Adipinsäureestergemischen enthalten, sowie von Vergleichs-PVC-Folien hergestellt aus Plastisolen, enthaltend Palatinol® N, Hexamoll® DINCH®, ein Gemisch aus Hexamoll® DINCH® und Vestinol INB oder ein Gemisch aus Hexamoll® DINCH® und Jayflex MB10.
Figur 7

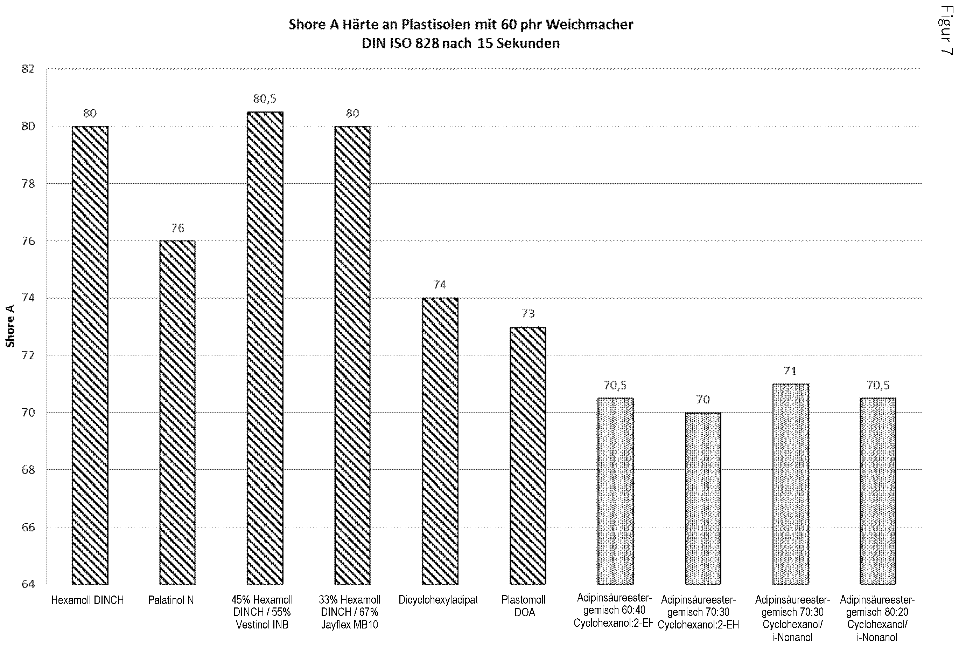

   Figur 7 zeigt die Shore A Härte von PVC-Folien hergestellt aus Plastisolen, die als Weichmacher-Komponente Adipinsäureestergemische enthalten, sowie von Vergleichs-PVC-Folien hergestellt aus Plastisolen, enthaltend Palatinol® N, Hexamoll® DINCH®, Dicyclohexyladipat, Plastomoll DOA, ein Gemisch aus Hexamoll® DINCH® und Vestinol INB oder ein Gemisch aus Hexamoll® DINCH® und Jayflex MB10.
Figur 8

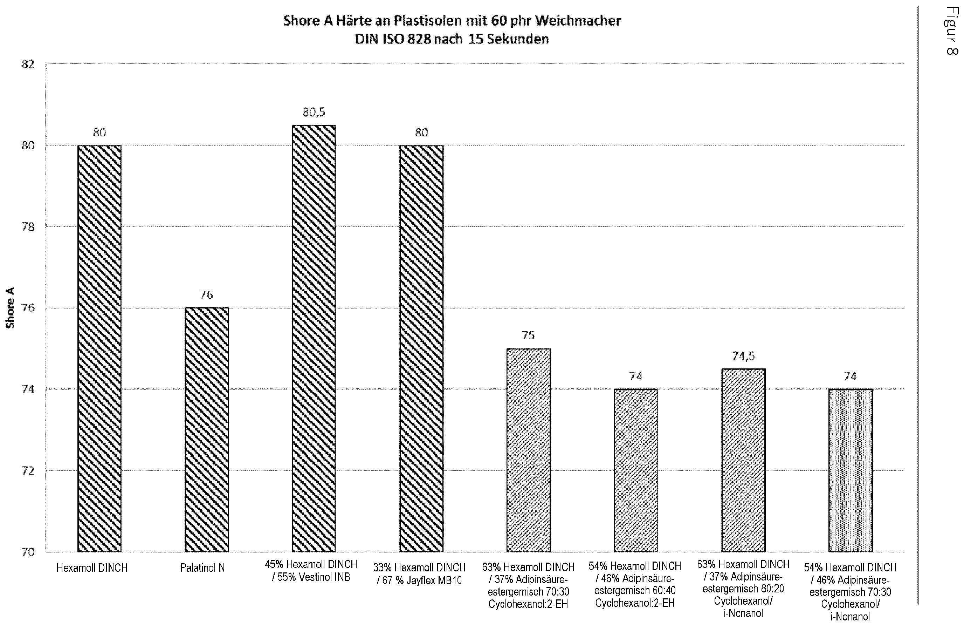

   Figur 8 zeigt die Shore A Härte von PVC-Folien hergestellt aus Plastisolen, die als Weichmacher-Komponente verschiedene Gemische von Hexamoll DINCH® und Adipinsäureestergemischen enthalten, sowie von Vergleichs-PVC-Folien hergestellt aus Plastisolen, enthaltend Palatinol® N, Hexamoll® DINCH®, ein Gemisch aus Hexamoll® DINCH® und Vestinol INB oder ein Gemisch aus Hexamoll® DINCH® und Jayflex MB10.
Figur 9

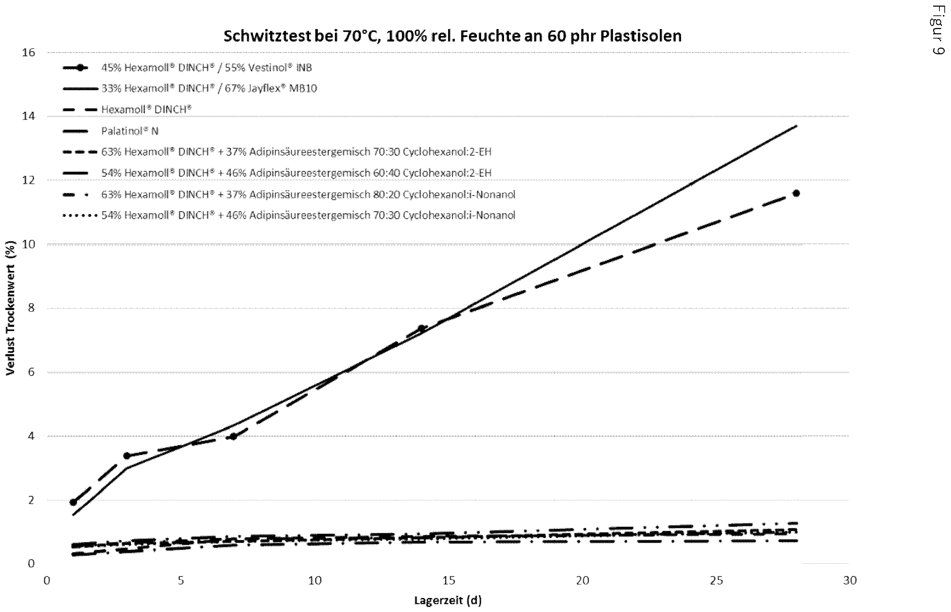

   Figur 9 zeigt das Verträglichkeitsverhalten von PVC-Folien hergestellt aus Plastisolen, die als Weichmacher-Komponente verschiedene Gemische von Hexamoll® DINCH® und Adipinsäureestergemischen enthalten, sowie von Vergleichs-PVC-Folien hergestellt aus Plastisolen, enthaltend Palatinol® N, Hexamoll® DINCH®, ein Gemisch aus Hexamoll® DINCH® und Vestinol INB oder ein Gemisch aus Hexamoll® DINCH® und Jayflex MB10.

### BEISPIELE

### Verwendete Abkürzungen

- 2-EH: 2-Ethylhexanol
- ASEG: für Adipinsäureestergemisch
- DCHA: für Dicyclohexyladipat
- CHOA: für Cyclohexyl-2-ethylhexyladipat
- DOA: für Bis(2-ethylhexyl)adipat

### Verwendete Einsatzstoffe

In den Beispielen werden folgende Einsatzstoffe verwendet:

| Einsatzstoff | Hersteller |
|---|---|
| Homopolymeres Emulsions-PVC, Markenname Solvin® 367 NC | INOVYN ChlorVinyls Limited, London, Vereinigtes Königreich |
| Homopolymeres Emulsions-PVC, Markenname Vinnolit® P 70 | Vinnolit GmbH, Ismaning, Deutschland |
| Isononylbenzoat, Markenname Vestinol® INB | Evonik, Marl, Deutschland |
| Isodecylbenzoat, Markenname Jayflex® MB 10 | Exxonmobil Chemical Belgium, Antwerpen, Belgien |
| Diisononylcyclohexandicarboxylat, Markenname Hexamoll® DINCH® | BASF SE, Ludwigshafen, Deutschland |
| Diisononylphthalat, Markenname Palatinol® N | BASF SE, Ludwigshafen, Deutschland |
| Di-2-Ethylhexyladipat Markenname Plastomoll® DOA | BASF SE, Ludwigshafen, Deutschland |
| Ba-Zn Stabilisator, Markenname Reagens SLX/781 | Reagens S.p.A., Bologna, Italien |

### A) Analysemethoden

### A.i) Analyse der Estergemisch-Zusammensetzung

Die erhaltenen Estergemisch-Zusammensetzungen wurden mittels Gaschromatografie (GC) untersucht. Zur Quantifizierung wurden die jeweiligen Flächen der GC-Kurven ins Verhältnis gesetzt. Für die GC-Analysen wurde ein Gerät von Agilent (Agilent 7890 B) mit einer DB1 Säule (30 m Länge x 0,25 mm Innendurchmesser mit 1 µm Beschichtung) verwendet.

### A.ii) Bestimmung des Schmelzpunktes

Die Bestimmung des Schmelzpunktes erfolgte mittels dynamischer Differenzkalorimetrie (DSC). Dazu wurde jeweils eine kleine Probe (ca. 5 mg) in einen Aluminiumtiegel eingewogen und mit einer Heizrate von 2 K/min gemessen. Es wurde ein DSC Q2000 Gerät der Firma TA Instruments verwendet.

### A.iii) Bestimmung der Viskosität

Die Bestimmung der dynamischen Viskosität erfolgte bei 20 ° C nach der ASTM D7042-14 mit Hilfe eines Stabinger Viskosimeters der Firma Anton-Paar.

### A.iv) Bestimmung der Dichte

Die Bestimmung der Dichte erfolgte nach ASTM D7042-14 mit Hilfe eines Stabinger Viskosimeters der Firma Anton-Paar bei 20 ° C.

### A.v) Bestimmung des Brechungsindex

Die Bestimmung des Brechungsindex erfolgte nach DIN 51423-1, Februar 2010.

### A.vi) Bestimmung der Farbzahl

Die Bestimmung der Pt/Co-Farbzahl erfolgte nach DIN EN ISO 6271-1:, März 2005.

### A.vii) Bestimmung der Säurezahl

Die Bestimmung der Säurezahl erfolgte nach DIN EN ISO 2114:2002-06, Juni 2002.

### A.viii) Bestimmung des Wassergehaltes

Die Bestimmung des Wassergehaltes nach Karl-Fischer erfolgte nach DIN 51777, Teil 1, März 1983.

### B) Synthese gemischter Ester der Adipinsäure

### B.i) Beispiel B1

In einem ölbeheizten 1,6 L Doppelmantelreaktor aus Glas mit Gaseinleitungsrohr, dreistufigem Kreuzbalkenrührer, aufgesetzter Kolonne (5 Montz-Packungen A3-1000, Material 2.4610, Maße 41 x 50 mm; theoretische Bodenzahl ca. 20-25 pro Meter), Kühler, ölbefülltem Gärröhrchen zum Luftausschluss und Wasserabscheider wurden unter Stickstoffatmosphäre Adipinsäure (409 g, 2,8 mol), Cyclohexanol (757 g, 7,56 mol) und 2-Ethylhexanol (109 g, 0,84 mol) vorgelegt. Das resultierende Gemisch wurde bei Atmosphärendruck zum Sieden erhitzt (anfangs ca. 160 ° C, zum Ende 200 ° C) und anschließend mit einer katalytischen Menge Tyzor TPT 20 B (Gemisch aus 80% Isopropyl- und 20% Butyltitanat; 0,63 g, 2,22 mmol) versetzt. Das entstehende Wasser wurde im Abscheider von den Alkoholen, welche über die Kolonne zurück in den Reaktor geführt wurden, abgetrennt.

Der Reaktionsfortschritt wurde durch Wiegen des abgeschiedenen Wassers, gaschromatographischen Messungen sowie durch regelmäßige Bestimmung der Säurezahl des Reaktionsgemisches überwacht. Die Säurezahl wurde durch automatische Titration des Reaktionsgemisches mit methanolischer Tetrabutylammoniumhydroxidlösung bestimmt, wobei die Endpunktsbestimmung potentiometrisch erfolgte.

Nach 6 Stunden waren gaschromatographisch weder Adipinsäure noch deren Monoester festzustellen und die Säurezahl des Reaktionsgemisches betrug < 0.05 mg KOH/g, woraufhin die Reaktion beendet wurde.

Zur Entfernung des Katalysators wurden bei 80° C 2 Gew.-% Natronlauge (5.70 g) zugegeben und das Gemisch 10 min gerührt. Daraufhin wurden weitere 45 mL Wasser zugegeben und das Gemisch erneut für 10 min gerührt. Das zugegebene Wasser wurde destillativ entfernt (100° C, 170 mbar) und das Rohprodukt nach Abkühlen auf Raumtemperatur über eine Druckfilternutsche mit Seitz-K100-Filterplatte filtriert (max. 3 bar).

Überschüssige Alkohole wurden durch Wasserdampfdestillation (1 bar Wasserdampf, 140 bis 200° C) unter Stickstoffatmosphäre entfernt. Nach Behandlung des Rohproduktes mit Aktivkohle (1 g) und erneuter Filtration wurde ein Gemisch aus Dicyclohexyladipat (DCHA), Cyclohexyl-2-ethylhexyladipat (CHOA) und Bis(2-ethylhexyl)adipat (DOA) erhalten.

Die Zusammensetzung enthielt 69,5 % DCHA, 27,1 % CHOA und 2,6 % DOA. Diese Zusammensetzung wird auch als "Adipinsäureestergemisch 90:10" bezeichnet.

Die Zusammensetzung hatte folgende Eigenschaften:
- Säurezahl: 0,05 mg KOH /g
- Farbzahl: 65
- Schmelzpunkt: 30° C
- Kristallisation: nach mehreren Tagen bei Raumtemperatur
- Dichte: 1,0114 g/cm³
- Brechungsindex: 1,4681
- Wassergehalt: 0,077 g/100g
Dichte, Brechungsindex und Farbzahl wurden an einer zuvor aufgeschmolzenen und wieder auf 20° C abgekühlten Probe bestimmt.

### B.ii) Beispiel B2

Analog zu Beispiel 1 wurde ein weiteres Estergemisch der Adipinsäure aus Adipinsäure (409 g, 2,8 mol), Cyclohexanol (673 g, 6,72 mol) und 2-Ethylhexanol (219 g, 1,68 mol) hergestellt.

Die Zusammensetzung enthielt 51 % DCHA, 40,7 % CHOA und 7,4 % DOA. Diese Zusammensetzung wird auch als "Adipinsäureestergemisch 80:20" bezeichnet.

Die Zusammensetzung hatte folgende Eigenschaften:
- Säurezahl: 0,08 mg KOH /g
- Farbzahl: 45
- Schmelzpunkt: 26° C
- Kristallisation: nach mehreren Wochen bei Raumtemperatur
- Dynamische Viskosität: 32,07 mPas
- Dichte: 0,9969 g/cm3
- Brechungsindex: 1,4648
- Wassergehalt: 0,074 g/100g

### B.iii) Beispiel B3

Analog zu Beispiel 1 wurde ein weiteres Estergemisch der Adipinsäure aus Adipinsäure (409 g, 2,8 mol), Cyclohexanol (588 g, 5,88 mol) und 2-Ethylhexanol (328 g, 2,52 mol) hergestellt.

Die Zusammensetzung enthielt 34,1 % DCHA, 49,9 % CHOA und 16 % DOA. Diese Zusammensetzung wird auch als "Adipinsäureestergemisch 70:30" bezeichnet.

Die Zusammensetzung hatte folgende Eigenschaften:
- Säurezahl: 0,14 mg KOH /g
- Farbzahl: 40
- Schmelzpunkt: 20 ° C
- Kristallisation: keine Kristallisation auch nach mehreren Monaten unter Standardbedingungen, sondern lediglich durch Zugabe von DCHA-Impfkristallen oder beim Abkühlen auf -50 ° C
- Dynamische Viskosität: 26,5 mPas
- Dichte: 0,9851 g/cm3
- Brechungsindex: 1,4618
- Wassergehalt: 0,0344 g/100g

### B.iv) Beispiel B4

Analog zu Beispiel 1 wurde ein weiteres Estergemisch der Adipinsäure aus Adipinsäure (409 g, 2,8 mol), Cyclohexanol (567 g, 5,67 mol) und 2-Ethylhexanol (355 g, 2,73 mol) hergestellt.

Die Zusammensetzung enthielt 23,5 % DCHA, 50,7 % CHOA und 25,8 % DOA. Diese Zusammensetzung wird auch als "Adipinsäureestergemisch 67,5:32,5" bezeichnet.

Die Zusammensetzung hatte folgende Eigenschaften:
- Dynamische Viskosität: 22,7 mPas
- Dichte: 0,9727 g/cm3
- Brechungsindex: 1,4588
- Farbzahl: 60
- Säurezahl: 0,035 mg KOH /g
- Wassergehalt: 0,012 g/100g

### B.v) Beispiel B5

Analog zu Beispiel 1 wurde ein weiteres Estergemisch der Adipinsäure aus Adipinsäure (409 g, 2,8 mol), Cyclohexanol (551 g, 5,5 mol) und 2-Ethylhexanol (383 g, 2,94 mol) hergestellt.

Die Zusammensetzung enthielt 22,2 % DCHA, 50,1 % CHOA und 27,7 % DOA. Diese Zusammensetzung wird auch als "Adipinsäureestergemisch 65:35" bezeichnet.

Die Zusammensetzung hatte folgende Eigenschaften:
- Dynamische Viskosität: 22,1 mPas
- Dichte: 0,971 g/cm3
- Brechungsindex: 1,4582
- Farbzahl: 43
- Säurezahl: 0,137 mg KOH /g
- Wassergehalt: 0,0987 g/100g

### B.vi) Beispiel B6

Analog zu Beispiel 1 wurde ein weiteres Estergemisch der Adipinsäure aus Adipinsäure (409 g, 2,8 mol), Cyclohexanol (525 g, 5,25 mol) und 2-Ethylhexanol (410 g, 3,15 mol) hergestellt.

Die Zusammensetzung enthielt 20,6 % DCHA, 50 % CHOA und 29,4 % DOA. Diese Zusammensetzung wird auch als "Adipinsäureestergemisch 62,5:37,5" bezeichnet.

Die Zusammensetzung hatte folgende Eigenschaften:
- Dynamische Viskosität: 21,6 mPas
- Dichte: 0,9688 g/cm3
- Brechungsindex: 1,4578
- Farbzahl: 34
- Säurezahl: 0,022 mg KOH /g
- Wassergehalt: 0,054 g/100g

### B.vii) Beispiel B7

Ein weiteres Estergemisch der Adipinsäure wurde aus Adipinsäure (409 g, 2,8 mol), Cyclohexanol (505 g, 5,04 mol) und 2-Ethylhexanol (438 g, 3,36 mol) hergestellt. Weitestgehend wurde wie in Beispiel 1 verfahren, jedoch wurde vor der Zugabe von Natronlauge ein Drittel der überschüssigen Alkohole im Vakuum entfernt (200 ° C, 420 mbar).

Die Zusammensetzung enthielt 15,6 % DCHA, 48,4 % CHOA und 35,8 % DOA. Diese Zusammensetzung wird auch als "Adipinsäureestergemisch 60:40" bezeichnet.

Die Zusammensetzung hatte folgende Eigenschaften:
- Säurezahl: 0,02 mg KOH /g
- Farbzahl: 40
- Schmelzpunkt: nicht bestimmbar
- Kristallisation: keine Kristallisation nach mehreren Monaten unter Standardbedingungen, keine Kristallisation durch Zugabe von DCHA-Impfkristallen oder beim Abkühlen auf -50 ° C
- Dynamische Viskosität: 20,5 mPas
- Dichte: 0,9649 g/cm3
- Brechungsindex: 1,4558
- Wassergehalt: 0,071 g/100g0

### B.viii) Beispiel B8

Analog zu Beispiel 1 wurde ein weiteres Estergemisch der Adipinsäure aus Adipinsäure (409 g, 2,8 mol), Cyclohexanol (673 g, 6,72 mol) und Isononanol (242 g, 1,68 mol) hergestellt.

Die Zusammensetzung enthielt 46 % DCHA, 43,9 % Cyclohexylisononyladipat und 10,1 % Diisononyladipat. Diese Zusammensetzung wird auch als "Adipinsäureestergemisch 70:30" bezeichnet.

Die Zusammensetzung hatte folgende Eigenschaften:
- Dynamische Viskosität: 33,2 mPas
- Dichte: 0,9898 g/cm3
- Brechungsindex: 1,4641
- Farbzahl: 66
- Säurezahl: 0,068 mg KOH /g
- Wassergehalt: 0,121 g/100g

### B.ix) Beispiel B9

Analog zu Beispiel 1 wurde ein weiteres Estergemisch der Adipinsäure aus Adipinsäure (409 g, 2,8 mol), Cyclohexanol (588 g, 5,88 mol) und Isononanol (363 g, 2,52 mol) hergestellt.

Die Zusammensetzung enthielt 26,8 % DCHA, 45,6 % Cyclohexylisononyladipat und 27,6 % Diisononyladipat. Diese Zusammensetzung wird auch als "Adipinsäureestergemisch 70:30" bezeichnet.

Die Zusammensetzung hatte folgende Eigenschaften:
- Dynamische Viskosität: 28,2 mPas
- Dichte: 0,9715 g/cm3
- Brechungsindex: 1,4604
- Farbzahl: 36
- Säurezahl: 0,033 mg KOH /g
- Wassergehalt: 0,0611 g/100g

### B.x) Zusammenfassung der Adipinsäureestergemische

Zusammensetzung der Adipinsäureestergemische (Flächen-% nach GC)

| | Dicyclohexyl-adipat | Cyclohexyl-2-ethylhexyladipat | Di-2-ethylhexyladipat |
|---|---|---|---|
| Adipinsäureestergemisch B1 (90:10) | 69,9 | 27,5 | 2,6 |
| Adipinsäureestergemisch B2 (80:20) | 51,4 | 41,1 | 7,5 |
| Adipinsäureestergemisch B3 (70:30) | 34,1 | 49,9 | 16 |
| Adipinsäureestergemisch B4 (67,5:32,5) | 23,5 | 50,7 | 25,8 |
| Adipinsäureestergemisch B5 (65:35) | 22,2 | 50,1 | 27,7 |
| Adipinsäureestergemisch B6 (62,5:37.5) | 20,6 | 50,0 | 29,4 |
| Adipinsäureestergemisch B7 (60:40) | 15,6 | 48,6 | 35,8 |
| | | | |
| | Dicyclohexyladipat | Cyclohexyl-Isononyladipat | Diisononyladipat |
| Adipinsäureestergemisch B8 (80:20) | 46,0 | 43,9 | 10,1 |
| Adipinsäureestergemisch B9 (70:30) | 26,8 | 45,6 | 27,6 |

### C) Anwendungstechnische Prüfungen

### C.i) Weichmacher-Zusammensetzungen

Es wurden folgende Weichmacher-Zusammensetzungen und Vergleichs-Weichmacher-Zusammensetzungen verwendet:

| | Zusammensetzung |
|---|---|
| C01 | 100 % Adipinsäureestergemisch B1 (90:10) |
| C02 | 100 % Adipinsäureestergemisch B2 (80:20) |
| C03 | 100 % Adipinsäureestergemisch B3 (70:30) |
| C04 | 100 % Adipinsäureestergemisch B4 (67,5:32,5) |
| C05 | 100 % Adipinsäureestergemisch B5 (65:35) |
| C06 | 100 % Adipinsäureestergemisch B6 (62,5:37,5) |
| C07 | 100 % Adipinsäureestergemisch B7 (60:40) |
| C08 | 100 % Adipinsäureestergemisch B8 (80:20) |
| C09 | 100 % Adipinsäureestergemisch B9 (70:30) |
| C10 | 71 % Hexamoll DINCH |
| | 29 % Adipinsäureestergemisch B1 (90:10) |
| | Zusammensetzung |
| C11 | 67 % Hexamoll DINCH |
| | 33 % Adipinsäureestergemisch B2 (80:20) |
| C12 | 63 % Hexamoll DINCH |
| | 37 % Adipinsäureestergemisch B3 (70:30) |
| C13 | 54 % Hexamoll DINCH |
| | 46 % Adipinsäureestergemisch B4 (67,5:32,5) |
| C14 | 58 % Hexamoll DINCH |
| | 42 % Adipinsäureestergemisch B5 (65:35) |
| C15 | 56 % Hexamoll DINCH |
| | 44 % Adipinsäureestergemisch B6 (62,5:37,5) |
| C16 | 54 % Hexamoll DINCH |
| | 46 % Adipinsäureestergemisch B7 (60:40) |
| C17 | 63 % Hexamoll DINCH |
| | 37 % Adipinsäureestergemisch B8 (80:20) |
| C18 | 54 % Hexamoll DINCH |
| | 46 % Adipinsäureestergemisch B9 (70:30) |
| C19 ^{a} | 45 % Hexamoll DINCH |
| | 55 % Vestinol INB |
| C20 ^{a} | 33 % Hexamoll DINCH |
| | 67 % Jayflex MB10 |

| | |
|---|---|
| a Vergleichsbeispiel | |

Es wurden zudem folgende Vergleichs-Weichmacher verwendet:

| | |
|---|---|
| C21 ^{a} | 100 % Palatinol N |
| C22 ^{a} | 100 % Hexamoll DINCH |
| C23 ^{a} | 100 % Plastomoll DOA |
| C24 ^{a} | 100 % Dicyclohexyladipat |

| | |
|---|---|
| a Vergleichsbeispiel | |

Im Folgenden werden, sofern nichts anderes angegeben ist, unter Weichmacher-Zusammensetzung sowohl die genannten Weichmacher-Zusammensetzungen als auch die genannten 1-Komponenten-Weichmacher zusammengefasst.

### C.ii) Bestimmung des Gelierverhaltens von PVC-Plastisolen

Zur Untersuchung des Gelierverhaltens von PVC-Plastisolen wurden Plastisole hergestellt, welche jeweils eine der oben genannten Weichmacher-Zusammensetzungen enthalten. Dabei wurde die folgende Rezeptur verwendet:

| Einsatzstoff | Anteil [phr] |
|---|---|
| PVC (Mischung aus 70 Gewichtsteilen homopolymeres Emulsions-PVC, Markenname Solvin® 367 NC und 30 Gewichtsteilen homopolymeres Emulsions-PVC, Markenname Vinnolit® P 70) | 100 |
| Weichmacher-Zusammensetzung bzw. Weichmacher | 100 |
| Ba-Zn Stabilisator, Typ Reagens SLX/781 | 2 |

Die Herstellung der Plastisole erfolgte in der Weise, dass die zwei PVC-Typen in einem PE(Polyethylen)-Becher zusammen eingewogen wurden. In einen zweiten PE-Becher wurden die flüssigen Komponenten eingewogen. Mit Hilfe eines Dissolvers (Fa. Jahnke & Kunkel, IKA-Werk, Typ RE-166 A, 60-6000 1/min, Durchmesser Dissolverscheibe = 40 mm) wurde bei 400 U/min das PVC in die flüssigen Komponenten eingerührt. Nachdem ein Plastisol entstanden war, wurde die Drehzahl auf 2500 1/min erhöht und 150 s homogenisiert. Das Plastisol wurde aus dem PE-Becher in eine Stahlschale überführt und diese in einem Exsikkator einem Druck von 10 mbar ausgesetzt. Dadurch wurde die in dem Plastisol enthaltene Luft entfernt. Je nach Luftgehalt blähte sich das Plastisol mehr oder weniger stark auf. In diesem Stadium wurde durch Schütteln des Exsikkators die Oberfläche des Plastisols zerstört und zum Kollabieren gebracht. Ab diesem Zeitpunkt wurde das Plastisol noch weitere 15 min in dem Exsikkator bei einem Druck von 10 mbar belassen. Danach wurde die Vakuumpumpe abgeschaltet, der Exsikkator belüftet und das Plastisol wieder in den PE-Becher überführt. Das so erhaltene Plastisol wurde für die rheologischen Messungen verwendet. Messbeginn war bei allen Plastisolen 30 min nach der Homogenisierung.

Um ein flüssiges PVC-Plastisol zu gelieren und vom Zustand homogen in Weichmacher dispergierter PVC-Partikel in eine homogene, feste Weich-PVC-Matrix zu überführen, muss die dafür notwendige Energie in Form von Wärme zugeführt werden. In einem Verarbeitungsprozess stehen dafür die Parameter Temperatur und Verweilzeit zur Verfügung. Je schneller die Gelierung abläuft (Indiz ist hier die Lösetemperatur, d. h. je niedriger diese ist, desto schneller geliert das Material), umso geringer kann die Temperatur (bei gleicher Verweilzeit) oder die Verweilzeit (bei gleicher Temperatur) gewählt werden.

Die Untersuchung des Gelierverhaltens eines Plastisols erfolgte nach interner Methode mit einem Rheometer MCR302 der Firma Anton Paar. Gemessen wurde hierbei die Viskosität der Paste unter Aufheizen bei konstanter, geringer Scherung (Oszillation).

Für die Oszillationsversuche wurden folgende Parameter verwendet:
- Messsystem: Parallele Platten, 50 mm Durchmesser
- Amplitude: 1%
- Frequenz: 1 Hz
- Spaltbreite: 1 mm
- Ausgangstemperatur: 20° C
- Temperaturprofil: 20 ° C bis 200 ° C
- Heizrate: 10 K/min
- Anzahl der Messpunkte: 201
- Messdauer der einzelnen Messpunkte: 0,09 min

Die Messung erfolgte in zwei Schritten. Der erste Schritt diente der Temperierung der Probe. Bei 20 ° C wurde das Plastisol für 2 min bei konstanter Amplitude (gamma) mit γ = 1 % leicht geschert. Im zweiten Schritt wurde das Temperaturprogramm verwendet. Bei der Messung wurden der Speichermodul und der Verlustmodul aufgezeichnet. Aus diesen beiden Größen wurde die komplexe Viskosität η*errechnet. Die Temperatur, bei der das Maximum der komplexen Viskosität erreicht wurde, wurde als die Geliertemperatur des Plastisols bezeichnet.

### C.iii) Bestimmung der Prozessflüchtigkeit während der Verarbeitung von Plastisolen

Unter der Prozessflüchtigkeit versteht man den Gewichtsverlust an Weichmacher während der Verarbeitung von Plastisolen. Wie unter C.ii) beschrieben wurden Plastisole hergestellt, welche jeweils eine der oben genannten Weichmacher-Zusammensetzungen enthalten. Dabei wurde die folgende Rezeptur verwendet:

| Einsatzstoff | Anteil [phr] |
|---|---|
| PVC (Mischung aus 70 Gewichtsteilen homopolymeres Emulsions-PVC, Markenname Solvin® 367 NC und 30 Gewichtsteilen homopolymeres Emulsions-PVC, Markenname Vinnolit® P 70) | 100 |
| Weichmacher-Zusammensetzung bzw. Weichmacher | 60 |
| Ba-Zn Stabilisator, Typ Reagens SLX/781 | 2 |

### Herstellung einer Vorfolie

Um an den Plastisolen anwendungstechnische Eigenschaften bestimmen zu können, muss das flüssige Plastisol in eine verarbeitbare feste Folie überführt werden. Dazu wurde das Plastisol bei niedriger Temperatur vorgeliert. Die Gelierung der Plastisole erfolgte in einem Mathisofen.

Dabei wurden folgende Einstellungen am Mathisofen verwendet:
- Abluft: Klappe ganz offen
- Frischluft: offen
- Umluft: maximale Position
- Oberluft/Unterluft: Oberluft Stellung 1

Es wurde ein neues Trennpapier (release paper) in die Einspannvorrichtung am Mathisofen eingespannt. Der Ofen wurde auf 140 ° C vorgeheizt und die Gelierzeit auf 25 s eingestellt. Für die Spalteinstellung wurde der Spalt zwischen Papier und Rakel mit der Dickenschablone auf 0,1 mm eingestellt. Die Dickenmessuhr wurde auf 0,1 mm gestellt. Dann wurde der Spalt auf einen Wert von 0,7 mm auf der Messuhr eingestellt.

Das Plastisol wurde auf das Papier aufgetragen und mit dem Rakel glatt gestrichen. Anschließend wurde über den Startknopf die Einspannvorrichtung in den Ofen gefahren. Nach 25 s wurde die Einspannvorrichtung wieder aus dem Ofen gefahren. Das Plastisol war geliert und die entstandene Folie wurde anschließend in einem Stück von dem Papier abgezogen. Die Dicke dieser Folie betrug ca. 0,5 mm.

### Bestimmung der Prozessflüchtigkeit

Zur Bestimmung der Prozessflüchtigkeit wurde mit einem Shore-Härte-Stanzeisen aus der Vorfolie je 3 quadratische Probekörper (49 mm x 49 mm) ausgestanzt, gewogen und anschließend 2 Minuten bei 190 ° C im Mathisofen geliert. Nach dem Abkühlen wurden diese Probekörper zurückgewogen und der Gewichtsverlust in % errechnet. Die Probekörper wurden dazu immer exakt auf der gleichen Stelle des Trennpapiers (release paper) positioniert.

### C.iv) Bestimmung der Folienflüchtigkeit von Folien aus Plastisolen

Die Folienflüchtigkeit ist ein Maß für die Flüchtigkeit eines Weichmachers im fertigen weichgemachten PVC-Artikel. Für die Prüfung der Folienflüchtigkeit wurden, wie unter C.ii) beschrieben, Plastisole hergestellt, welche jeweils eine der oben genannten Weichmacher-Zusammensetzungen enthalten.

Für die Prüfungen wurde hier aber nicht erst eine Vorfolie hergestellt, sondern das Plastisol wurde direkt 2 min bei 190 ° C im Mathisofen geliert. An den so erhaltenen ca. 0,5 mm dicken Folien wurde die Prüfung der Folienflüchtigkeit durchgeführt.

### Prüfung der Folienflüchtigkeit über 24 h bei 130 ° C

Für die Bestimmung der Folienflüchtigkeit wurden aus den 2 min bei 190 ° C gelierten Plastisolen vier Einzelfolien (150 mm x 100 mm) ausgeschnitten, gelocht und gewogen. Die Folien wurden an einen rotierenden Stern in einen auf 130 ° C eingestellten Heraeus Trockenschrank Typ 5042 E gehängt. In dem Schrank wurde 18 mal pro Stunde die Luft gewechselt. Dies entspricht 800 l/h Frischluft. Nach 24 Stunden in dem Schrank wurden die Folien entnommen und zurückgewogen. Der Gewichtsverlust in Prozent gibt die Folienflüchtigkeit der Zusammensetzungen an.

### C.v) Bestimmung der Shore A-Härte von Folien aus Plastisolen

Die Shore A-Härte ist ein Maß für die Elastizität von weichgemachten PVC-Artikeln. Je niedriger die Shore-Härte, desto höher die Elastizität der PVC-Artikel. Für die Bestimmung der Shore A Härte wurden wie unter C.iii) beschrieben 49 mm x 49 mm große Folienstücke aus den Vorfolien ausgestanzt und analog der Flüchtigkeitsprüfung jeweils im Dreierpack 2 min bei 190 ° C geliert. Insgesamt wurden so 27 Stück Folien geliert. Diese 27 Stücke wurden im Pressrahmen übereinander gelegt und bei 195 ° C zu einem 10 mm dicken Shore-Klotz gepresst.

Beschreibung der Shore-Härte Messung:
- Methode: DIN EN ISO 868, Okt. 2003
- Titel: Bestimmung der Eindruckhärte mit einem Durometer (Shore-Härte)
- Gerät: Fa. Hildebrand- Digital Durometer Modell DD-3
- Probekörper:
   Maße: 49 mm x 49 mm x 10 mm (Länge x Breite x Dicke)
   Herstellung: gepresst aus ca. 27, 0,5 mm dicken Gelierfolien
   Presstemperatur: 195 ° C = 5 ° C über der Herstellung der Gelierfolien
- Lagerzeit vor Messung: 7 d im Klimaraum bei 23 ° C und 50 % rel. Feuchte
- Messzeit: 15 s (Dauer der Nadel auf dem Probekörper bis zum Ablesen des Wertes)
- Es werden 10 Einzelwerte gemessen und daraus der Mittelwert berechnet.

Der Messwert der Shore A Härte-Messung wurde nach jeweils 15 Sekunden abgelesen.

### C.vi) Mechanische Werte

Die mechanischen Eigenschaften von weichgemachten PVC-Artikeln werden unter anderem mit Hilfe der Bruchdehnung, 100-% Modulus und Bruchspannung charakterisiert. Je höher die Bruchdehnung, desto besser die mechanischen Eigenschaften des weichgemachten PVC-Artikels. Bei 100-% Modulus und Bruchspannung zeigen niedrigere Werte eine bessere Eigenschaft des Weichmachers an. Für die Prüfungen wurde hier aber nicht erst eine Vorfolie hergestellt, sondern das Plastisol wurde direkt 2 min bei 190 ° C im Mathisofen geliert. An den so erhaltenen ca. 0,5 mm dicken Folien wurde die Prüfung der Bruchdehnung 100-% Modulus und Bruchspannung durchgeführt.

Der Parameter Bruchdehnung, 100-% Modulus und Bruchspannung werden nach DIN EN ISO 527, Teil 1 und 3, bestimmt. Im Einzelnen wird wie folgt vorgegangen.
- Maschine: Zwicki Typ TMZ 2.5/TH1S,
- Methode: Prüfung nach DIN EN ISO 527 Teil 1 (Juni 2012) und Teil 3 (Juli 2003),
- Probekörper: Folienstreifen Typ 2 nach DIN EN ISO 527 Teil 3, 150 mm lang, 15 mm breit, ausgestanzt,
- Anzahl Probekörper: Pro Prüfung werden 10 Proben vermessen,
- Klima: Normklima 23° C (+- 1° C), 50% Luftfeuchtigkeit,
- Lagerzeit: 7 Tage im Normklima vor der Messung,
- Klemmen: Glatt-Konvex mit 6 bar Klemmendruck,
- Einspannlänge: 100 mm,
- Messlänge: Es wird über die Traverse gemessen, d.h. die Einspannlänge ist gleich der Messlänge = 100 mm,
- Prüfgeschwindigkeit: 100 mm/min.

### C.vii) Bestimmung der Verträglichkeit (Permanenz) von Folien

### Zweck des Prüfverfahrens

Die Prüfung dient zur qualitativen und quantitativen Messung der Verträglichkeit von Weich-PVC-Rezepturen. Sie wird bei erhöhter Temperatur (70 ° C) und Luftfeuchte (100 % rel. h) durchgeführt. Die erhaltenen Daten werden gegen die Lagerzeit ausgewertet.

### Probekörper

Zur Standardprüfung wurden je Rezeptur 10 Prüfkörper (Folien) mit einer Größe von 75 mm x 110 mm x 0,5 mm verwendet. Die Folien wurden an der Breitseite gelocht, beschriftet und gewogen. Die Beschriftung muss wischfest sein und kann z. B. mit dem Lötkolben erfolgen.

### Prüfgeräte

Wärmeschrank, Analysenwaage, Temperaturmessgerät mit Fühler zur Messung der Innenraumtemperatur des Wärmeschrankes, Becken aus Glas, Metallgestelle aus nichtrostendem Material;

### Prüfparameter

Prüftemperatur: 70° C
Prüfmedium: entstehender Wasserdampf bei 70° C aus vollentsalztem Wasser

### Durchführung

Es wurde die Temperatur im Innenraum des Wärmeschrankes auf die geforderten 70 ° C eingestellt. Die Prüffolien wurden auf ein Drahtgestell aufgehängt und in eine Glaswanne, die etwa 5 cm hoch mit Wasser (VE-Wasser) gefüllt war, hineingestellt. Die Folien dürfen dabei nicht in das Wasser eintauchen. Es dürfen nur Folien gleicher Zusammensetzung in einem gekennzeichneten und nummerierten Becken gelagert werden, um gegenseitige Beeinflussung zu vermeiden und die Entnahme nach den jeweiligen Lagerzeiten zu erleichtern.

Die Glaswanne wurde mit einer PE-Folie wasserdampfdicht verschlossen, damit der später in der Glaswanne entstandene Wasserdampf nicht entweichen konnte.

### Lagerzeit

Im 1-, 3-, 7-, 14- und 28-Tage-Rhythmus wurden jeweils 2 Folien (Doppelbestimmung) aus der Glaswanne entnommen und für 1 Std. frei hängend an der Luft klimatisiert. Danach wurden die Folien im Abzug mit Methanol gereinigt (mit Methanol angefeuchtetes Handtuch). Anschließend wurden die Folien für 16 h bei 70 ° C in einem Trockenschrank (natürliche Konvektion) frei hängend getrocknet. Nach Entnahme aus dem Trockenschrank wurden die Folien für 1 Std. im Labor frei hängend konditioniert und anschließend gewogen. Als Prüfergebnis angegeben wurde jeweils der arithmetische Mittelwert der Gewichtsänderungen zu den Proben vor dem Einbringen in den Wärmeschrank.

### D) Anwendungstechnische Prüfungen, Ergebnisse

### D.i) Gelierverhalten

Das Gelierverhalten wurde wie unter C.ii) beschrieben bestimmt. Dabei wurden die oben genannten Weichmacher-Zusammensetzungen C01 bis C13 eingesetzt. Die Ergebnisse sind in den Figuren 1 und 4 dargestellt.

Figur 1 zeigt für das Gelierverhalten von Plastisolen enthaltend eine der Weichmacher-Zusammensetzungen C01 bis C07 verbesserte Eigenschaften im Vergleich zu den Plastisolen enthaltend die Vergleichs-Weichmacher C21 oder C22.

Figur 2 zeigt für das Gelierverhalten von Plastisolen enthaltend eine der Weichmacher-Zusammensetzungen C10 bis C16 vergleichbare Eigenschaften im Vergleich zu den Plastisolen enthaltend die Vergleichs-Weichmacher-Zusammensetzungen C19, C20, C21 und verbesserte Eigenschaften im Vergleich zu dem Plastisol enthaltend den Vergleichsweichmacher C22.

Figur 3 zeigt für das Gelierverhalten von Plastisolen enthaltend eine der Weichmacher- Zusammensetzungen C08 bis C09 verbesserte Eigenschaften im Vergleich zu den Plastisolen enthaltend die Vergleichs-Weichmacher C21 oder C22.

Figur 4 zeigt für das Gelierverhalten von Plastisolen enthaltend eine der Weichmacher- Zusammensetzungen C17 und C18 vergleichbare Eigenschaften im Vergleich zu den Plastisolen enthaltend die Vergleichs-Weichmacher-Zusammensetzungen C19, C20, C21 und verbesserte Eigenschaften im Vergleich zu dem Plastisol enthaltend den Vergleichsweichmacher C22.

### D.ii) Prozessflüchtigkeit

Die Prozessflüchtigkeit wurde wie unter C.iii) beschrieben bestimmt. Dabei wurden die oben genannten Weichmacher-Zusammensetzungen C03 und C07 bis C09, C10 bis C12 und C16 bis C22.

**Prozessflüchtigkeit (Masseverlust) der Adipinsäureestergemische**

| | | Masseverlust [%] |
|---|---|---|
| C03 | 100 % Adipinsäureestergemisch B3 (70:30) | 4,2 |
| C07 | 100 % Adipinsäureestergemisch B7 (60:40) | 4,3 |
| C08 | 100 % Adipinsäureestergemisch B8 (80:20) | 3,6 |
| C09 | 100 % Adipinsäureestergemisch B9 (70:30) | 3,1 |

Figur 5 zeigt für die PVC-Plastisole enthaltend eine der Weichmacher-Zusammensetzungen C10 bis C12 und C16 bis C18 eine vorteilhafte, deutlich geringere Prozessflüchtigkeit im Vergleich zu den PVC-Plastisolen enthaltend eine der Vergleichs-Weichmacher-Zusammensetzungen C19 und C20. Die Prozessflüchtigkeit der PVC-Plastisole enthaltend eine der Weichmacher-Zusammensetzungen C10 bis C12 und C16 bis C18 ist allerdings höher als die der PVC-Plastisole enthaltend die Vergleichs-Weichmacher C21 oder C22.

Bei der Verarbeitung der erfindungsgemäßen PVC-Plastisole geht also deutlich weniger Weichmacher verloren als bei PVC-Plastisolen enthaltend Vergleichs-Weichmacher-Zusammensetzungen mit mehreren Komponenten.

### D.iii) Folienflüchtigkeit

Die Folienflüchtigkeit wurde wie unter C.iv) beschrieben bestimmt. Dabei wurden die oben genannten Weichmacher-Zusammensetzungen C03, C07 bis C09, C10 bis C12 und C16 bis C22 eingesetzt.

**Folienflüchtigkeit (Masseverlust) der Adipinsäureestergemische**

| | | Masseverlust [%] |
|---|---|---|
| C03 | 100 % Adipinsäureestergemisch B3 (70:30) | 11,6 |
| C07 | 100 % Adipinsäureestergemisch B7 (60:40) | 10,7 |
| C08 | 100 % Adipinsäureestergemisch B8 (80:20) | 9,6 |
| C09 | 100 % Adipinsäureestergemisch B9 (70:30) | 7,3 |

Figur 6 zeigt für Folien enthaltend die Weichmacher-Zusammensetzungen C10 bis C12 und C16 bis C18 eine vorteilhafte, deutlich geringere Folienflüchtigkeit im Vergleich zu den Folien enthaltend eine der Vergleichs-Weichmacher-Zusammensetzungen C19 und C20. Die Folienflüchtigkeit der Folien enthaltend eine der Weichmacher-Zusammensetzungen C10 bis C12 und C16 bis C18 ist allerdings höher als die der Folien enthaltend die Vergleichs-Weichmacher C21 oder C22.

Die Folien der erfindungsgemäßen Plastisole verlieren also deutlich weniger Weichmacher als die Folien enthaltend die Vergleichs-Weichmacher-Zusammensetzungen mit mehreren Komponenten.

### D.iv) Shore A Härte

Die Shore A Härte wurde wie unter C.v) beschrieben bestimmt. Dabei wurden die oben genannten Weichmacher-Zusammensetzungen C03, C07 bis C09, C12 und C16 bis C24 eingesetzt. Die Ergebnisse sind in den Figuren 7 und 8 dargestellt.

Figur 7 zeigt für die Shore A Härte von Folien enthaltend die Weichmacher-Zusammensetzungen C03 und C07 bis C09 eine vorteilhaftere niedrigere Shore A Härte im Vergleich zu den Folien enthaltend die Vergleichs-Weichmacher-Zusammensetzungen C19 bis C24.

Figur 8 zeigt für die Shore A Härte von Folien enthaltend die Weichmacher-Zusammensetzungen C12 und C16 bis C18 eine vorteilhaftere geringere Shore A Härte im Vergleich zu den Folien enthaltend die Vergleichs-Weichmacher-Zusammensetzungen C19 bis C22.

Die Folien der erfindungsgemäßen Plastisole weisen folglich eine höhere Elastizität der PVC-Artikel auf.

### D.v) Mechanische Werte

Die mechanischen Eigenschaften wurden wie unter C vi) beschrieben bestimmt.

Die untenstehende Tabelle zeigt die Ergebnisse der Prüfung der Weichmacher-Zusammensetzungen C12 und C16 bis C18. Es ist zu erkennen, dass die mechanischen Werte der Weichmacher-Zusammensetzungen C12 und C16 bis C18 ähnlich gute Werte ergeben wie die Weichmacherzusammensetzungen der kommerziell erhältlichen Weichmacher der Weichmacherzusammensetzungen C21 und C22.

| | | Bruchspannung [MPa] | 100% Modul [%] | Bruchdehnung [%] |
|---|---|---|---|---|
| C12 | 63 % Hexamoll DINCH | 15,1 | 6,6 | 325 |
| | 37 % Adipinsäureestergemisch B3 (70:30) | | | |
| C16 | 54 % Hexamoll DINCH | 14,6 | 6,2 | 336 |
| | 46 % Adipinsäureestergemisch B7 (60:40) | | | |
| C17 | 63 % Hexamoll DINCH | 15,9 | 6,6 | 344 |
| | 37 % Adipinsäureestergemisch B8 (80:20) | | | |
| C18 | 54 % Hexamoll DINCH | 15,9 | 6,5 | 352 |
| | 46 % Adipinsäureestergemisch B9 (70:30) | | | |
| C21 | 100 % Palatinol N | 16,8 | 6,8 | 345 |
| C22 | 100 % Hexamoll DINCH | 17 | 7,4 | 340 |

### D.vi) Verträglichkeit

Die Verträglichkeit wurde wie unter C vii) beschrieben bestimmt.

Figur 9 zeigt die Ergebnisse der Prüfung der Weichmacherzusammensetzungen C12, C16 bis C18 und C19 bis C22 als Vergleichs-Zusammensetzungen. Es ist zu erkennen, dass die Weichmacherzusammensetzungen C12, C16 bis C18 und C21 und C22 eine sehr gute Verträglichkeit mit PVC aufweisen, wohingegen die Weichmacher-Zusammensetzungen C21 und C22 eine sehr schlechte Verträglichkeit mit PVC aufweisen. Die Folien der erfindungsgemäßen Plastisole weisen folglich eine bessere Verträglichkeit mit PVC auf.

## Patentansprüche

1. Polymer-Zusammensetzung, enthaltend
A) eine oder mehrere Polymerkomponente(n) ausgewählt unter thermoplastischen Polymeren und Elastomeren sowie Mischungen davon,
B1) eine oder mehrere Verbindung(en) der Formel (I) 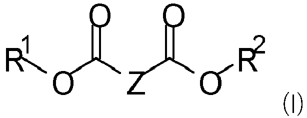 worin
Z für eine unverzweigte oder verzweigte C₂-C₈-Alkylengruppe oder für eine unverzweigte oder verzweigte C₂-C₈-Alkenylengruppe, enthaltend wenigstens eine Doppelbindung, steht und
R¹ für einen gesättigten, unverzweigten oder verzweigten C₇-C₁₂-Alkylrest steht, und
R² für eine gesättigte C₃-C₈-Cycloalkylgruppe steht, wobei die Cycloalkyl-Reste unabhängig voneinander entweder unsubstituiert sind oder mit wenigstens einem C₁-C₁₀-Alkyl Rest substituiert sind,
und
C) einen oder mehrere weitere(n) Weichmacher, der/die ausgewählt ist/sind unter
- 1,2-Cyclohexandicarbonsäuredialkylestern,
- Phthalsäuredialkylestern,
- Terephthalsäuredialkylestern,
wobei die eine oder mehrere Polymerkomponente(n) ausgewählt ist unter
- Homo- oder Copolymeren, die wenigstens ein Monomer einpolymerisiert enthalten, das ausgewählt ist unter C₂-C₁₀-Monoolefinen, 1,3-Butadien, 2-Chlor-1,3-butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten von C₁-C₁₀-Alkoholen, Vinylaromaten, Acrylnitril, Methacrylnitril, Maleinsäureanhydrid und α,β-ethylenisch ungesättigten Mono- und Dicarbonsäuren,
- Polyvinylestern,
- Polycarbonaten,
- Polyestern,
- Polyethern,
- Polyetherketonen,
- thermoplastischen Polyurethanen,
- Polysulfiden,
- Polysulfonen,
- Polyethersulfonen,
- Cellulosealkylestern,
und Mischungen davon.

2. Polymer-Zusammensetzung nach Anspruch 1, zusätzlich enthaltend
B2) eine oder mehrere Verbindung(en) der allgemeinen Formel (II.a), 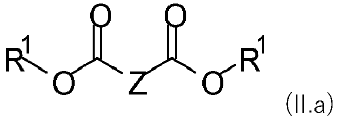 und
B3) eine oder mehrere Verbindung(en) der allgemeinen Formel (II.b) 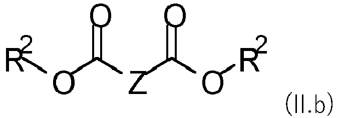 worin
Z für eine unverzweigte oder verzweigte C₂-C₈-Alkylengruppe oder für eine unverzweigte oder verzweigte C₂-C₈-Alkenylengruppe, enthaltend wenigstens eine Doppelbindung, steht und
R¹ für einen gesättigten, unverzweigten oder verzweigten C₇-C₁₂-Alkylrest steht, und
R² für einen gesättigten C₃-C₈-Cycloalkylrest steht, wobei die Cycloalkyl-Reste unabhängig voneinander entweder unsubstituiert sind oder mit wenigstens einem C₁-C₁₀-Alkyl Rest substituiert sind,

3. Formmasse, bestehend aus oder enthaltend eine Polymer-Zusammensetzung wie in einem der Ansprüche 1 bis 2 definiert.

4. Plastisol, bestehend aus oder enthaltend eine Polymer-Zusammensetzung wie in einem der Ansprüche 1 bis 2 definiert.

5. Verwendung einer Polymer-Zusammensetzung wie in einem der Ansprüche 1 bis 2 definiert, als Weichmacher für thermoplastische Polymere und Elastomere, insbesondere für Polyvinylchlorid (PVC) Homo und Copolymere und Polymerblends davon.

6. Verwendung einer Polymer-Zusammensetzung wie in einem der Ansprüche 1 bis 2 definiert, in einem Plastisol, bevorzugt in einem Plastisol, welches im Wesentlichen aus PVC Homo- und Copolymeren als Polymerkomponente besteht.

7. Verwendung einer Polymer-Zusammensetzung wie in einem der Ansprüche 1 bis 2 definiert, in einer Formmasse, bevorzugt in einer Formmasse, welche im Wesentlichen aus PVC Homo- und Copolymeren als Polymerkomponente besteht.

8. Verwendung einer Polymer-Zusammensetzung wie in einem der Ansprüche 5 bis 7 definiert, zur Herstellung von Formkörpern und Folien.

9. Verwendung gemäß Anspruch 8, wobei es sich bei den Formkörpern um Ummantelungen von Werkzeugen, Fahrrad-, Roller- oder Schubkarrengriffen, Schläuche, Wasserschläuche, Bewässerungsschläuche, Industrie-Schläuche aus Elastomeren, Chemieschläuche, Ummantelungen für Draht oder Kabel, Verpackungsbehälter, Profile, Fensterprofile, Förderbänder, Bodenprofile für den Außenbereich, Komponenten für den Fahrzeugbau, Kfz-Innenraumausstattung, Karosseriebestandteile, Unterbodenschutz, Vibrationsdämpfer, Radiergummis, geschäumte oder nicht geschäumte Tapeten oder Metallbeschichtungen handelt
und/oder
wobei es sich bei den Folien um Planen, LKW-Planen, Dachplanen, Geomembranen, Stadiondächer, Zeltplanen, Dichtungen, Selbstklebefolien, Kaschierfolien, Schrumpffolien, Bodenbeläge für den Außenbereich, Tischdecken, Klebebandfolien, Beschichtungen, Schwimmteichfolien, Zierteichfolien oder Kunstleder handelt.

10. Verwendung einer Polymer-Zusammensetzung wie in einem der Ansprüche 5 bis 8 definiert, zur Herstellung von Formkörpern und Folien, die direkt in Kontakt mit Menschen oder Nahrungsmitteln kommen können.

11. Verwendung gemäß Anspruch 10, wobei es sich bei den Formkörpern und Folien um Medizinprodukte, Hygieneprodukte, Lebensmittelverpackungen, Produkte für den Innenraum, Baby- und Kinderprodukte, Kinderpflegeartikel, Sport- oder Freizeitprodukte, Bekleidung, Fasern oder Gewebe handelt.
